(19) Europäisches Patentamt
European Patent Office
Office européen des brevets

(11) **EP 4 788 011 A1**

(12) **EUROPEAN PATENT APPLICATION**
published in accordance with Art. 153(4) EPC

(43) Date of publication:
**05.08.2026 Bulletin 2026/32**

(21) Application number: **23953586.7**

(22) Date of filing: **27.09.2023**

(51) International Patent Classification (IPC):
**H04W 72/12** (2023.01)

(52) Cooperative Patent Classification (CPC):
**H04W 72/12**

(86) International application number:
**PCT/CN2023/122340**

(87) International publication number:
**WO 2025/065434 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **1FINITY Inc.**
**Kawasaki-shi, Kanagawa 211-8588 (JP)**

(72) Inventors:
• **JIANG, Qinyan**
  **Beijing 100022 (CN)**
• **ZHANG, Lei**
  **Beijing 100022 (CN)**

(74) Representative: **Haseltine Lake Kempner LLP**
**Cheapside House**
**138 Cheapside**
**London EC2V 6BJ (GB)**

(54) **INFORMATION SENDING METHOD AND APPARATUS, AND INFORMATION RECEIVING METHOD AND APPARATUS**

(57) Embodiments of this disclosure provide an information reception method, an information transmission method and apparatuses thereof and a communication system. The reception method includes: in a scheduling cell, monitoring and/or receiving a first downlink control information format (DCI format) for scheduling a physical downlink shared channel (PDSCH) of one or more cells in a first cell set and/or a second DCI format for scheduling a physical uplink shared channel (PUSCH) of one or more cells in a second cell set; and receiving a PDSCH in some or all of cell(s) scheduled by the first DCI format, and/or transmitting a PUSCH in some or all of cell(s) scheduled by the second DCI format.

201
a terminal equipment monitors and/or receives a first downlink control information format (DCI format) for scheduling a physical downlink shared channel (PDSCH) of one or more cells in a first cell set and/or a second DCI format for scheduling a physical uplink shared channel (PUSCH) of one or more cells in a second cell set in a scheduling cell

202
the terminal equipment receives a PDSCH in some or all of cell(s) scheduled by the first DCI format, and/or transmits a PUSCH in some or all of cell(s) scheduled by the second DCI format

**Fig.2**

**Description**

<u>Technical Field</u>

This disclosure relates to the field of communication technologies.

<u>Background</u>

New radio NR supports spectrum in different frequency ranges. At present, it can be predicted that 5G will have more available spectrum due to re-farming of frequency bands that are originally used in the previous generation networks. Wherein, for a low-frequency FR1 frequency band, available spectrum blocks may be more dispersed and bandwidths may be more narrow. On the other hand, for a frequency range FR2 frequency band and some frequency range FR1 frequency bands, as available spectrum in the same frequency band will be wider, intra-band multi-carrier operations are necessary. Therefore, taking demands for different spectrum into account, in order to improve network throughput and good coverage, it is necessary to ensure that these scattered spectrum or large bandwidth spectrum are used in a more efficient and flexible manner, such as by improving flexibility of scheduling data in multiple cells and spectrum/power efficiency.

In a current scheduling mechanism, for one downlink control information (DCI), scheduling a physical uplink shared channel PUSCH of a single cell or a physical downlink shared channel PDSCH of a single cell by it is only allowed/supported. Taking the above available scattered spectrum or large bandwidth spectrum into account, one mode is to further support scheduling PUSCHs or PDSCHs of multiple cells by the same scheduling DCI, so as to improve flexibility and efficiency and lower control overhead. Therefore, in Rel-18, one of the goals of multi-carrier enhancement is to support scheduling PUSCHs/PDSCHs of multiple cells by a single DCI, wherein only one PDSCH or one PUSCH is scheduled for one cell.

It should be noted that the above description of the background is merely provided for clear and complete explanation of this disclosure and for easy understanding by those skilled in the art. And it should not be understood that the above technical solution is known to those skilled in the art as it is described in the background of this disclosure.

<u>Summary</u>

At present, in order to save power consumption of a terminal equipment, a cell can be indicated as being deactivated or dormant. In Rel-18 under discussion, in order to support scheduling multiple cells by a single DCI, new DCI formats for respectively scheduling PUSCHs and PDSCHs will be introduced. At present, it has been agreed that the DCI formats may further be used to indicate cell dormancy, but in case of cell deactivation and/or dormancy, how to use the DCI formats for scheduling and how to receive the DCI formats and PDSCHs or PUSCHs scheduled by the DCI formats are still under discussion.

In order to solve at least one of the above problems, embodiments of this disclosure provide an information transmission method, an information reception method and apparatuses thereof.

According to one aspect of the embodiments of this disclosure, there is provided an information transmission apparatus, applicable to a network device, wherein the apparatus includes a transmitter, or includes a transmitter and a receiver,

wherein the transmitter transmits a first downlink control information format (DCI format) for scheduling a physical downlink shared channels (PDSCH) of one or more cells in a first cell set and/or a second DCI format for scheduling a physical uplink shared channel (PUSCH) of one or more cells in a second cell set in a scheduling cell;
and the transmitter further transmits a PDSCH in some or all of cell(s) scheduled by the first DCI format, and/or the receiver receives a PUSCH in some or all of cell(s) scheduled by the second DCI format.

According to another aspect of the embodiments of this disclosure, there is provided an information reception apparatus, applicable to a terminal equipment, wherein the apparatus includes a receiver, or includes a receiver and a transmitter,

wherein the receiver monitors and/or receives a first downlink control information format (DCI format) for scheduling a physical downlink shared channels (PDSCH) of one or more cells in a first cell set and/or a second DCI format for scheduling a physical uplink shared channel (PUSCH) of one or more cells in a second cell set in a scheduling cell;
and the receiver further receives a PDSCH in some or all of cell(s) scheduled by the first DCI format, and/or the transmitter transmits a PUSCH in some or all of cells scheduled by the second DCI format.

According to a further aspect of the embodiments of this disclosure, there is provided a communication system, including the terminal equipment as described in the other aspect and/or the network device as described in the one aspect.

An advantage of the embodiments of this disclosure exists in that in the case of cell deactivation and/or dormancy, the terminal equipment monitors and/or receives or does not monitor and/or does not receive the DCI format(s) supporting scheduling PDSCHs or PUSCHs of multiple cells and the PDSCHs or PUSCHs scheduled by the DCI format(s), which may achieve multi-carrier enhancement, while save power consumption of the terminal equipment and improve resource efficiencies.

With reference to the follnumbverowing description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiments of the invention may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is schematic diagram of a communication system of embodiments of this disclosure;
FIG. 2 is a schematic diagram of an information reception method of embodiments of this disclosure;
FIG. 3 is a schematic diagram of cell configuration information in serving cell configuration information of the embodiments of this disclosure;
FIG. 4 is a schematic diagram of a reference cell and a scheduling cell of the embodiments of this disclosure;
FIG. 5 is a schematic diagram of an information transmission method of embodiments of this disclosure;
FIG. 6 is a schematic diagram of an information reception apparatus of embodiments of this disclosure;
FIG. 7 is a schematic diagram of an information transmission apparatus of embodiments of this disclosure;
FIG. 8 is a schematic diagram of a network device of embodiments of this disclosure; and
FIG. 9 is a schematic diagram of a terminal equipment of embodiments of this disclosure.

Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and higher-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "terminal equipment (TE)". The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, a machine to machine (M2M) terminal, and a terminal supporting sidelink communication, etc.

In the embodiments of this disclosure, existing services or services that may be implemented in the future may be performed between a network device and a terminal equipment. For example, such services may include but not limited to an enhanced mobile broadband (eMBB), massive machine type communication (mMTC), ultra-reliable and low-latency communication (URLLC), and vehicle to everything (V2X), etc.

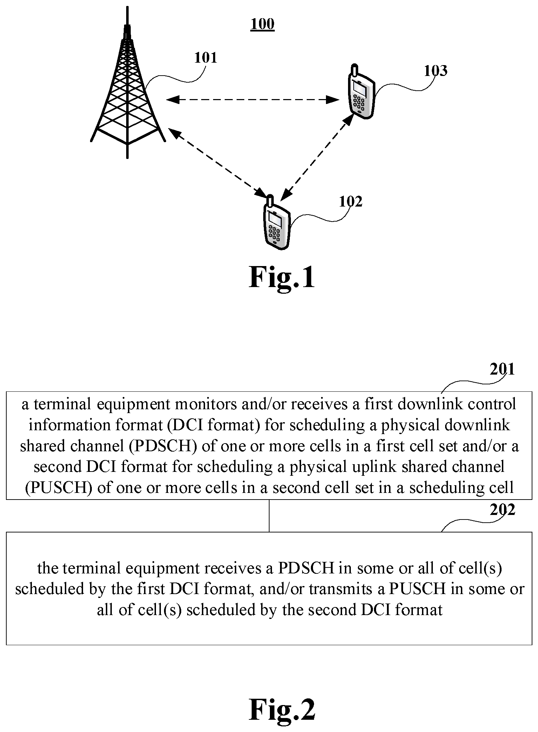

FIG. 1 is a schematic diagram of a communication system of embodiments of this disclosure, in which a case where terminal equipments and a network device are taken as examples is schematically shown. As shown in FIG. 1, the communication system 100 may include a network device 101 and terminal equipments 102, 103. For the sake of simplicity, an example having only two terminal equipments and one network device is schematically given in FIG. 1; however, the embodiments of this disclosure is not limited thereto.

In the embodiments of this disclosure, existing services or services that may be implemented in the future may be performed between the network device 101 and the terminal equipments 102, 103. For example, such services may include but not limited to an enhanced mobile broadband (eMBB), massive machine type communication (mMTC), and ultra-reliable and low-latency communication (URLLC), etc.

The terminal equipment 102 may transmit data to the network device 101, such as in a granted or grant-free transmission manner. The network device 101 may receive data transmitted by one or more terminal equipments 102 and feed back information to the terminal equipment 102, such as acknowledgement (ACK)/non-acknowledgement (NACK) information. According to the feedback information, the terminal equipment 102 may acknowledge end of a transmission process, or may perform new data transmission, or may perform data retransmission.

It should be noted that FIG. 1 shows that two terminal equipments 102, 103 are both in coverage of the network device 101. However, this disclosure is not limited thereto, and the two terminal equipments 102, 103 may not be in coverage of the network device 101, or one terminal equipment 102 is in coverage of the network device 101 and the other terminal equipment 103 is out of coverage of the network device 101.

In the following description, without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In addition, transmitting or receiving a PUSCH may be understood as transmitting or receiving uplink data carried by the PUSCH, transmitting or receiving a PUCCH may be understood as transmitting or receiving uplink information (e.g. UCI) carried by the PUCCH, transmitting or receiving a PRACH may be understood as transmitting or receiving a preamble carried by the PRACH; transmitting or receiving a PDSCH may be understood as transmitting or receiving downlink data carried by the PDSCH, and transmitting or receiving a PDCCH may be understood as transmitting or receiving downlink information (e.g. DCI) carried by the PDCCH.

Furthermore, in the following description, without causing confusion, "if...", "in a case where..." and "when..." are interchangeable, and "dormancy" and "deactivation" are interchangeable.

In the embodiments of this disclosure, higher layer signaling may be, for example, radio resource control (RRC) signaling; for example, the RRC signaling includes an RRC message, which includes a master information block (MIB), system information, and a dedicated RRC message, or an RRC information element (RRC IE); or an RRC message or an information field included in an RRC information element (or an information field included in information fields). Higher layer signaling may also be, for example, medium access control (MAC) signaling, or an MAC control element (MAC CE); however, this disclosure is not limited thereto.

In the embodiments of this disclosure, multiple means at least two, or two or more than two. And "ID" and "index" are interchangeable.

In the embodiments of this disclosure, "predefined" means defined in a protocol or determined according to a rule defined in a protocol, without needing additional configuration. Configuration/indication (interchangeable in some cases) refer(s) to configuring/indicating directly or indirectly by a network device via higher layer signaling and/or physical layer signaling. The physical layer signaling refers to, for example, control information (DCI) carried by a physical control channel or control information carried by a sequence; however, it is not limited thereto, and configuration/indication may be performed by introducing higher layer parameters into higher layer signaling. For example, information fields (or information fields included in information fields) included in an RRC IE or an RRC message or an RRC information element may also be referred to as higher layer parameters; however, this disclosure is not limited thereto.

Various embodiments of this disclosure shall be described below with reference to the accompanying drawings. These embodiments are illustrative only, and are not intended to limit this disclosure.

Embodiments of a first aspect

The embodiments of this disclosure provide an information reception method, which shall be described from a terminal equipment side.

FIG. 2 is a schematic diagram of the information reception method of the embodiments of this disclosure. As shown in FIG. 2, the method includes:

201: a terminal equipment monitors and/or receives a first downlink control information format (DCI format) for scheduling a physical downlink shared channel (PDSCH) of one or more cells in a first cell set and/or a second DCI format for scheduling a physical uplink shared channel (PUSCH) of one or more cells in a second cell set in a scheduling cell; and

202: the terminal equipment receives a PDSCH in some or all of cell(s) scheduled by the first DCI format, and/or transmits a PUSCH in some or all of cell(s) scheduled by the second DCI format.

It should be noted that FIG. 2 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 2.

In some embodiments, the first DCI format is DCI format 1_3, and the second DCI format is DCI format 0_3. In the following description, the DCI format may be replaced with a DCI format or a DCI or a DCI using a DCI format, etc. CRC of the first DCI format and/or the second DCI format is scrambled by a C-RNTI or an MCS-C-RNTI. The first DCI format is used for the scheduling of one PDSCH in one cell, or multiple PDSCHs in multiple cells with one PDSCH per cell, and the second DCI format is used for the scheduling of one PUSCH in one cell, or multiple PUSCHs in multiple cells with one PUSCH per cell.

In some embodiments, the terminal equipment may be configured to monitor/receive the first DCI format and/or the second DCI format in the scheduling cell.

In some embodiments, the scheduling cell may be an SpCell (or a primary cell, i.e. a Pcell or a PScell) or an SCell (of an MCG or an SCG). The serving cell configuration information of the scheduling cell includes an eighth higher layer parameter for configuring the terminal equipment to monitor and/or receive the first DCI format and/or the second DCI format in the scheduling cell. For example, the eighth higher layer parameter is included in search space information (SearchSpace) of the serving cell configuration information. That is, whether the terminal equipment monitors DCI format 1_3 and/or DCI format 0_3 in the scheduling cell is configured per SearchSpace. For example, for one UE-specific search space (i.e. USS) configured by SearchSpace, the terminal equipment may be configured to monitor DCI format 1_3 and/or DCI format 0_3 in the SearchSpace. The search space(s) used for monitoring DCI format 1_3 or DCI format 0_3 may be identical or different, wherein the search space information is, for example, configured per BWP, that is, it is included in the BWP configuration information.

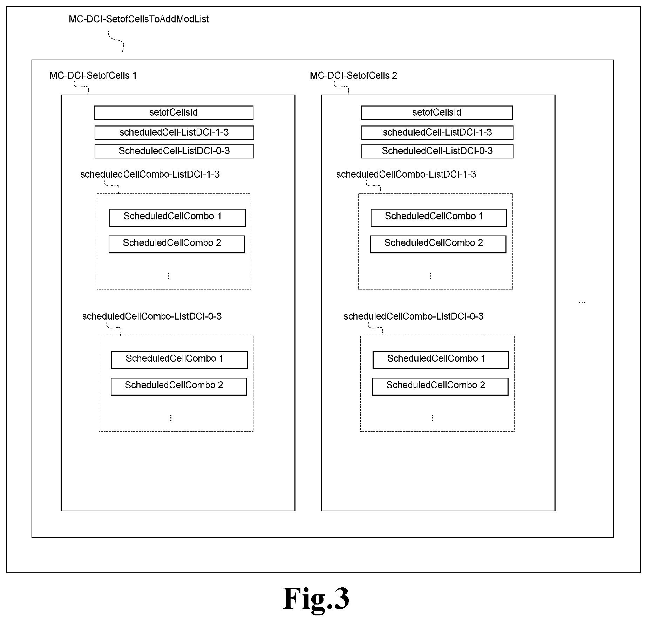

In some embodiments, the serving cell configuration information of the scheduling cell includes an eleventh higher layer parameter (e.g. MC-DCI-SetofCellsToAddModList) for configuring a list of cell sets, the eleventh higher layer parameter including one or more twelfth higher layer parameters (e.g. MC-DCI-SetofCells) for configuring cell sets. One twelfth higher layer parameter includes a thirteenth higher layer parameter (a cell set identifier, e.g. setofCellsID) for configuring a cell set ID, includes or does not include information (ScheduledCell-ListDCI-1-3, a first higher layer parameter) for configuring a (scheduled) cell list for the first DCI format(for the cell set of the first DCI format), and includes or does not include information (ScheduledCell-ListDCI-0-3, a second higher layer parameter) for configuring a (scheduled) cell list for the second DCI format (for the cell set of the second DCI format). The first higher layer parameter and the second higher layer parameter indicate the scheduled cell lists (cell sets) by respectively indicating serving cell indices of the cells, for example, the first higher layer parameter and the second higher layer parameter respectively indicate at least 2 and at most 4 (i.e. 2 to 4) serving cell indices. One twelfth higher layer parameter includes or does not include information (scheduledCellCombo-ListDCI-1-3, a third higher layer parameter) for configuring a (scheduled) list of combinations of cells for the first DCI format, and includes or does not include information (scheduledCellCombo-ListDCI-0-3, a fourth higher layer parameter) for configuring a (scheduled) list of combinations of cells for the second DCI format. The third higher layer parameter and the fourth higher layer parameter respectively include one or more fourteenth higher layer parameters (e.g. ScheduledCellCombo) (entries) for configuring combination of cells, information of the combination of cells corresponding to the first DCI format or the second DCI format, as shown in FIG. 3.

In some embodiments, one higher layer parameter used to configure a list (such as the eleventh higher layer parameter, the first higher layer parameter, the second higher layer parameter, the third higher layer parameter, the fourth higher layer parameter) includes another higher layer parameter used to configure the list, also known as an entry.

In some embodiments, cell sets configured in different twelfth higher layer parameters include (completely) different cells, that is, there exists no intersection therebetween. Or, in other words, cell sets associated with/corresponding to different cell set identifiers include (completely) different cells, that is, there exists no intersection therebetween.

In some embodiments, cells in the cell set configured by the first higher layer parameter and cells in the cell set configured by the second higher layer parameter in the same twelfth higher layer parameter are completely or partially identical, and/or the cell set configured by the first higher layer parameter and the cell set configured by the second higher layer parameter in the same twelfth higher layer parameter include at least one identical cell. Or, in other words, cells included in cell sets associated with/corresponding to identical cell set identifiers are completely or partially identical.

In some embodiments, the first DCI format is used to schedule PDSCHs(s) in one or more cells in the first cell set, and the second DCI format is used to schedule PUSCHs(s) in one or more cells in the second cell set, wherein being used scheduling denotes supporting scheduling or being able to schedule, being able to actually schedule or having not actually scheduled, and the first cell set and/or the second cell set is/are scheduled cell set(s).

In some embodiments, the scheduled cell sets are indicated by the fourth information field (scheduled cell set indicator) in the first DCI format and/or the second DCI format, and/or are configured by higher layer parameters, which shall be illustrated below.

In some embodiments, the fourth information field (scheduled cell set indicator) is used to indicate the scheduled cell sets. For example, in the first DCI format, the fourth information field indicates the scheduled first cell set from one or more cell sets (for the first DCI format) configured (by the eleventh higher layer parameter). In the second DCI format, the fourth information field indicates the scheduled second cell set from one or more cell sets (for the second DCI format) configured (by the eleventh higher layer parameter).

In some embodiments, the fourth information field includes $\left\lceil \log_2 N_{set} \right\rceil$ bits; where, $N_{set}$ is the number of cell sets configured by the eleventh higher layer parameter (e.g. MC-DCI-SetofCellsToAddModList) (or the number of included twelfth higher layer parameters and/or the number of configured cell set identifiers). For example, a relationship between a value of the fourth information field and the indicated scheduled cell sets is shown in table 1 below. When the value of the fourth information field is 0 (decimal), the scheduled cell set is a cell set configured by a first entry configured by the eleventh higher layer parameter.

In some embodiments, for the first DCI format, (if a part of entries in the eleventh higher layer parameter only configure a cell set for the second DCI format) the UE does not expect that the fourth information field provides an index corresponding to an entry that only includes the cell set configured for the second DCI format or an index corresponding to an entry that does not include the cell set configured for the first DCI format.

Table 1

| Bit field mapped to index | Scheduled cell set |
|---|---|
| 0 | Cell set configured by a first entry in the eleventh higher layer parameter |
| 1 | Cell set configured by a second entry in the eleventh higher layer parameter |
| 2 | Cell set configured by a third entry in the eleventh higher layer parameter (if any) |
| 3 | Cell set configured by a fourth entry in the eleventh higher layer parameter (if any) |

In some embodiments, the fourth information field in the first DCI format includes $\lceil \log_2 N_{set1} \rceil$ bits; where, $N_{set1}$ is the number of cell sets configured for the first DCI format by the eleventh higher layer parameter (e.g. MC-DCI-SetofCellsToAddModList). For example, a relationship between a value of the fourth information field and the indicated scheduled first cell set is shown in tables 2 and 3 below. When the value of the fourth information field is 0 (decimal), the scheduled cell set is a cell set (for the first DCI format) configured by a first entry configured by the eleventh higher layer parameter which configured with the first or second higher layer parameter (or a cell set for the first DCI format), or is the first cell set. The fourth information field in the second DCI format includes $\lceil \log_2 N_{set2} \rceil$ bits; where, $N_{set2}$ is the number of cell sets configured for the second DCI format by the eleventh higher layer parameter (e.g. MC-DCI-SetofCellsToAddMod-List). For example, a relationship between a value of the fourth information field and the indicated scheduled (second) cell set is shown in tables 2 and 3 below. When the value of the fourth information field is 0 (decimal), the scheduled cell set is a cell set (for the first DCI format) configured by a first entry configured by the eleventh higher layer parameter which configured with the first or second higher layer parameter (or a cell set for the first DCI format), or is the second cell set.

Table 2

| Bit field mapped to index | Scheduled cell set |
|---|---|
| 0 | A first entry in the eleventh higher layer parameter which configured with the first higher layer parameter (or a cell set for the first DCI format) |
| 1 | A second entry in the eleventh higher layer parameter which configured with the first or second higher layer parameter (or a cell set for the first DCI format) |
| 2 | A third entry in the eleventh higher layer parameter which configured with the first higher layer parameter (or a cell set for the first DCI format) |
| 3 | A fourth entry in the eleventh higher layer parameter which configured with the first higher layer parameter (or a cell set for the first DCI format) |

Table 3

| Bit field mapped to index | Scheduled cell set |
|---|---|
| 0 | A first entry in the eleventh higher layer parameter which configured with the second higher layer parameter (or a cell set for the second DCI format) |
| 1 | A second entry in the eleventh higher layer parameter which configured with the second higher layer parameter (or a cell set for the second DCI format) |
| 2 | A third entry in the eleventh higher layer parameter which configured with the second higher layer parameter (or a cell set for the first DCI format) |
| 3 | A fourth entry in the eleventh higher layer parameter which configured with the second higher layer parameter (or a cell set for the second DCI format) |

In some embodiments, the fourth information field indicates the scheduled cell set by indicating or based on a cell set identifier (configured by a thirteenth higher layer parameter). For example, for the first DCI format, the value of the fourth information field is equal to a value of a cell set ID associated with/corresponding to the scheduled cell set (first cell set). When the value of the fourth information field is 0 (decimal), the scheduled cell set (first cell set) is a cell set associated with/corresponding to cell set ID=0. For the second DCI format, the value of the fourth information field is equal to a value of a cell set ID associated with/corresponding to the scheduled cell set (second cell set). When the value of the fourth information field is 0 (decimal), the scheduled cell set (second cell set) is a cell set associated with/corresponding to cell set ID=0.

In some embodiments, the first DCI format and/or the second DCI format may not include the fourth information field, and the scheduled cell set may be determined according to a higher layer parameter.

For example, when the eleventh higher layer parameter only includes one twelfth higher layer parameter, the first DCI format and the second DCI format do not include the fourth information field. If the one twelfth higher layer parameter includes the first higher layer parameter, for the first DCI format, its corresponding scheduled cell set is a cell set configured by the one twelfth higher layer parameter or in the first higher layer parameter. If the one twelfth higher layer parameter includes the second higher layer parameter, for the second DCI format, its corresponding scheduled cell set is a cell set configured by the one twelfth higher layer parameter or in the second higher layer parameter.

For example, when the eleventh higher layer parameter includes only one twelfth higher layer parameter that includes the first higher layer parameter, the first DCI format does not include the fourth information field. For the first DCI format, its corresponding scheduled cell set is a cell set configured by the one twelfth higher layer parameter or in the first higher layer parameter.

For example, when the eleventh higher layer parameter only includes one twelfth higher layer parameter that includes the second higher layer parameter, the second DCI format does not include the fourth information field. For the second DCI format, its corresponding scheduled cell set is a cell set configured by the one twelfth higher layer parameter or in the second higher layer parameter.

In some embodiments, the first cell set and the second cell set are associated with/corresponding to a same cell set identifier. For example, the cell set identifier associated with/corresponding to the first cell set or the second cell set is a cell set ID configured by the thirteenth higher layer parameter in the twelfth higher layer parameter including the first higher layer parameter used to configure the first cell set or the second higher layer parameter used to configure the second cell set, that is, the first cell set and the second cell set are cell sets configured by the first higher layer parameter and the second higher layer parameter in the same twelfth higher layer parameter. The monitoring and/or reception of the first DCI format and/or the second DCI format is/are per cell set identifier. For different cell set identifiers, the terminal equipment monitors and/or receives different first DCI formats and/or second DCI formats, or, in other words, the terminal equipment monitors and/or receives a first DCI format and/or a second DCI format to which a cell set identifier corresponds. For example, for different cell set identifiers or first cell set and/or second cell set associated with different cell set identifiers, sizes of corresponding first DCI format and/or second DCI format are different, and/or search spaces and/or CORESET configurations used for monitoring and/or receiving corresponding first DCI format and/or second DCI format are different, and/or corresponding reference cells are different.

In some embodiments, as cells included in the cell set configured by the first higher layer parameter and cells included in the cell set configured by the second higher layer parameter in the same twelfth higher layer parameter (cell set identifier) are completely or partially identical, and/or the cell set configured by the first higher layer parameter and the cell set configured by the second higher layer parameter in the same twelfth higher layer parameter include at least one identical cell, the first cell set and the second cell set correspond to a same cell set identifier. Therefore, the cells in the first cell set and second cell set are completely or partially identical, and/or the first cell set and the second cell set include at least one identical cell (for example, the at least one identical cell includes a reference cell). one first cell set and one second cell set respectively include up to 4 cells.

How to indicate/configure the scheduled cell sets is described above. One or more cells scheduled by the first DCI format and/or the second DCI format in the scheduled cell sets are indicated by a second information field and/or a third information field in the first DCI format and/or the second DCI format, which shall be described below. A third higher layer parameter and a fourth higher layer parameter (if any) are included in the twelfth higher layer parameter corresponding to the scheduled cell sets.

In some embodiments, the second information field may be a resource assignment filed (frequency domain resource assignment), and is used to indicate frequency domain resource assignment. For example, for the first DCI format, the frequency domain resource assignment includes $N_{cell}^{DL}$ information blocks, information block 1, information block 2,... information block $N_{cell}^{DL}$; where, $N_{cell}^{DL}$ is/is equal to, for example, the number of cells in a scheduled combination of cells (first combination of cells) or the scheduled cell set (first cell set), wherein the scheduled first combination of cells is indicated by the third information field in the first DCI format or is configured by the third higher layer parameter (when the first DCI format does not include the third information field). An indication mode of the scheduled cell set is as described above. For example, when no (corresponding) list of first combinations of cells (or the third higher layer parameter) is configured (for the scheduled cell set), $N_{cell}^{DL}$ is equal to the number of cells in the scheduled cell set, and when a (corresponding) list of first combinations of cells (or the third higher layer parameter) is configured (for the scheduled first cell set), $N_{cell}^{DL}$ is equal to the number of cells in the scheduled combination of cells; however, it is not limited thereto. Wherein, each information block corresponds to frequency domain resource assignment of a cell (in $N_{cell}^{DL}$ cells), and the information blocks are arranged in an ascending order of cell indices (of the cells in the scheduled combination of cells or the scheduled cell set) (such as the above serving cell index and/or the second index). For example, information block 1 (a first one of information blocks) corresponds to frequency domain resource assignment of a cell with a smallest cell index, information block 2 (a second one of information blocks) corresponds to frequency domain resource assignment of cell with a secondarily smallest cell index, and so on.

For example, for the second DCI format, the frequency domain resource assignment includes $N_{cell}^{UL}$ information blocks, information block 1, information block 2,... information block $N_{cell}^{UL}$; where, $N_{cell}^{UL}$ is/is equal to, for example, the number of cells in a scheduled combination of cells (second combination of cells) or the scheduled cell set (second cell set), wherein the scheduled combination of cells is indicated by the third information field in the second DCI format or is configured by the fourth higher layer parameter (when the first DCI format does not include the third information field). An indication mode of the scheduled cell set is as described above. For example, when no (corresponding) list of combinations of cells (or the fourth higher layer parameter) is configured (for the scheduled cell set), $N_{cell}^{UL}$ is equal to the number of cells in the scheduled cell set, and when a (corresponding) list of combinations of cells (or the fourth higher layer parameter) is configured (for the scheduled cell set), $N_{cell}^{UL}$ is equal to the number of cells in the scheduled combination of cells; however, it is not limited thereto. Wherein, each information block corresponds to frequency domain resource assignment of a cell (in $N_{cell}^{UL}$ cells), and the information blocks are arranged in an ascending order of cell indices (of cells in a scheduled second combination of cells or a scheduled second cell set) (such as the above serving cell index and/or the second index). For example, information block 1 (a first one of information blocks) corresponds to frequency domain resource assignment of a cell with a smallest cell index, information block 2 (a second one of information blocks) corresponds to frequency domain resource assignment of cell with a secondarily smallest cell index, and so on.

For example, if more than one entry is configured for information for the first DCI format for configuring the list of combinations of cells (e.g. the third higher layer parameter ScheduledCellCombo-ListDCI-1-3), or, if the DCI format includes the third information field, $N_{cell}^{DL}$ is equal to the number of scheduled cells indicated by the third information field in the DCI format, and if one entry is configured (or only included) for the information for the first DCI format for configuring the list of combinations of cells (e.g. ScheduledCellCombo-ListDCI-1-3), $N_{cell}^{DL}$ is equal to the number of cells configured by the third higher layer parameter (e.g. ScheduledCellCombo-ListDCI-1-3) or the one entry included in the third higher layer parameter or an IE (e.g. ScheduledCellCombo) used for configuring a scheduled combination of cells; otherwise (or, if the DCI format does not include the third information field and/or the third information field is not provided), $N_{cell}^{DL}$ is equal to the number of cells in the scheduled cell set configured by the information used for configuring a scheduled cell set (e.g. the first higher layer parameter ScheduledCell-ListDCI-1-3).

For example, if more than one entry is configured for information of the second DCI format for configuring the list of combinations of cells (e.g. the fourth higher layer parameter ScheduledCellCombo-ListDCI-0-3), or, if the DCI format includes the third information field, $N_{cell}^{UL}$ is equal to the number of scheduled cells indicated by the third information field in the DCI format, and if one entry is configured (or only included) for the information of the DCI format for configuring the list of combinations of cells (e.g. the fourth higher layer parameter ScheduledCellCombo-ListDCI-0-3), $N_{cell}^{UL}$ is equal to the number of cells configured by the fourth higher layer parameter (e.g. ScheduledCellCombo-ListDCI-0-3) or the one entry included in the fourth higher layer parameter or an IE (e.g. ScheduledCellCombo) used for configuring a scheduled combination of cells; otherwise (or, if the DCI format does not include the third information field and/or the third information field is not provided), $N_{cell}^{UL}$ is equal to the number of cells in the scheduled cell set configured by the information used for configuring a scheduled cell set (e.g. the second higher layer parameter ScheduledCell-ListDCI-0-3).

In some embodiments, the second information field may be used to indicate scheduled cells and/or unscheduled cells (in the scheduled cell set or the scheduled combination of cells). That is, the second information field (frequency domain resource assignment) is used to indicate frequency domain resource assignment and/or the scheduled cells and/or the unscheduled cells (in the scheduled cell set or the scheduled combination of cells).

For example, the second information field in the first DCI format and/or the second DCI format indicates the scheduled cells and/or the unscheduled cells from the scheduled cell set(s) (the first cell set and/or the second cell set). Assuming that the scheduled cell set includes 4 cells, the second information field includes 4 information blocks (block number 1, block number 2, block number 3, block number 4), corresponding one by one to the 4 cells. If all bits in an information block corresponding to one cell are set to be a specific value, the cell is not scheduled; otherwise, the cell is scheduled. For example, for (bits in) an information block, the specific value is 0 or 1. For example, if a resource assignment type of a cell to which an information block corresponds is RA Type 0, the specific value for the information block is 0, if a resource assignment type of a cell to which an information block corresponds is RA Type 1, the specific value for the information block is 1, and if a resource assignment type of a cell to which an information block corresponds is a dynamic RA Type, the specific value for the information block is 0 or 1.

For another example, the second information field in the first DCI format and/or the second DCI format indicates the scheduled cells and/or the unscheduled cells from the scheduled cell set (indicated by the third information field or configured by the third higher layer parameter, when the first DCI format doe not include the third information field). Assuming that the scheduled first cell set includes 4 cells, the second information field includes 4 information blocks, corresponding one by one to the 4 cells. If all bits in an information block corresponding to a cell are set to be the specific value, the cell is not scheduled; otherwise, the cell is scheduled. As shown in table 4 below, only bits in information block 1 are not set to be the specific value, and a cell to which information block 1 corresponds, i.e. Cell 0, is indicated as a scheduled cell by the second information field, and/or, other cells are indicated as unscheduled cells by the second information field.

Table 4

| Value of information block in FDRA | Block number 1 (non-all-zero) | Block number 2 (all-zero) | Block number 3 (all-one) | Block number 4 (all-zero or all-one) |
|---|---|---|---|---|
| Corresponding cell and corresponding resource assignment type | Cell 0, RA Type 0 | Cell 1, RA Type 0 | Cell 2, RA Type 1 | Cell 3, Dynamic RA Type |
| Whether scheduled | Yes | No | No | No |

In some embodiments, when the first DCI format or the second DCI format includes the third information field, the second information field therein is not used to indicate the scheduled cells and/or the unscheduled cells.

In some embodiments, when the first DCI format or the second DCI format includes the third information field, the second information field therein is used to indicate the scheduled cells and/or the unscheduled cells in the combination of cells indicated by the third information field.

In some embodiments, the second information field is further used to indicate which information blocks in one or more other information fields are used to indicate Scell dormancy. For example, these information blocks are used to indicate Scell dormancy per Scell; however, it is not limited thereto. How to indicate SCell dormancy shall be described later.

In some embodiments, the third information field (scheduled cell indicator) is used to indicate the scheduled cells (or, in other words, it used to indicate the scheduled combination of cells). For example, in the first DCI format, the third information field indicates the scheduled cells (by indicating a first combination of cells) from the scheduled cell set (first cell set). For another example, in the second DCI format, the third information field indicates the scheduled cells (by indicating a second combination of cells) from the scheduled cell set (second cell set).

In some embodiments, the first DCI format and/or the second DCI format include(s) or does/do not include the third information field.

For example, for the first DCI format, when the third higher layer parameter (e.g. ScheduledCellCombo-ListDCI-1-3) (for/corresponding to the scheduled cell set (the first cell set)) is not configured (or, in other words, when the scheduled cell set does not include the list of combinations of cells), the third information field does not exist, or the number of bits is 0; otherwise, the number of bits is $\lceil \log_2 I_{DL} \rceil$, so as to indicate the scheduled cell from the scheduled cell set (or, in other words, to indicate the first combination of cells from the list of first combinations of cells (in the first cell set)); where, $I_{DL}$ is, for example, the number of entries configured by ScheduledCellCombo-ListDCI-1-3 (i.e. the number of fourteenth higher layer parameters it includes). If ScheduledCellCombo-ListDCI-1-3 configures only one entry, the scheduled cell is a cell configured by ScheduledCellCombo-ListDCI-1-3.

For example, for the second DCI format, when the fourth higher layer parameter (e.g. ScheduledCellCombo-ListDCI-0-3) (for/corresponding to the scheduled cell set (the second cell set)) is not configured (or, in other words, when the scheduled cell set does not include the list of combinations of cells), the third information field does not exist, or the number of bits is 0; otherwise, the number of bits is $\lceil \log_2 I_{UL} \rceil$, so as to indicate the scheduled cell from the scheduled cell set (or, in other words, to indicate the second combination of cells from the list of second combinations of cells (in the second cell set)); where, $I_{UL}$ is, for example, the number of entries configured by ScheduledCellCombo-ListDCI-0-3 (i.e. the number of fourteenth higher layer parameters it includes). If ScheduledCellCombo-ListDCI-0-3 configures only one entry, the scheduled cell is a cell configured by ScheduledCellCombo-ListDCI-0-3.

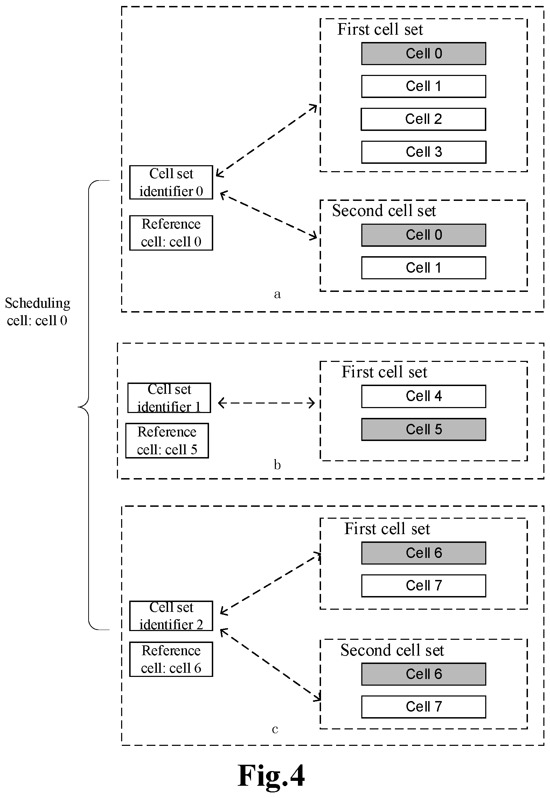

In some embodiments, the scheduling cell belongs to or does not belong to the first cell set, and/or, the scheduling cell belongs to or does not belong to the second cell set. The scheduling cell is used to transmit DCI format 1_3 for scheduling (cells in) the first cell set and/or DCI format 0_3 for scheduling (cells in) the second cell set. In addition, for the convenience of explanation, a reference cell is proposed in the embodiments of this disclosure. For a cell set, a (corresponding) reference cell is a cell in the cell set (the first cell set and/or the second cell set). For example, for cell sets associated with/corresponding to a same cell set identifier, their reference cell is identical; otherwise, their reference cells are different. For example, reference cell (associated with a same cell set identifier) of the first cell set and/or the second cell set is same; or, one cell set identifier corresponds to one reference cell (cell set identifiers correspond one-to-one with reference cells); however, it is not limited thereto. The one cell is a scheduling cell or a cell in the cell set different from the scheduling cell. For example, when the cell set includes a scheduling cell, the reference cell may be the scheduling cell or a cell in the cell set that is different from the scheduling cell. When the cell set does not include a scheduling cell, the reference cell is a cell in the cell set (different from the scheduling cell), that is, the reference cell is not the scheduling cell. FIG. 4 is a schematic diagram of a relationship between the scheduling cell, the reference cell and the cell set of the embodiments of this disclosure. As shown in a of FIG. 4, the first cell set and the second cell set include a scheduling cell, and the reference cell is the scheduling cell; as shown in b of FIG. 4, the first cell set does not include a scheduling cell, and the reference cell is a cell in the first cell set; and as shown in c of FIG. 4, the first cell set and the second cell set do not include a scheduling cell, and the reference cell is a cell in the first cell set and the second cell set.

That is, the scheduling cell and the reference cell include the following situations:

situation 1: the scheduling cell belongs to the first cell set and/or the second cell set, and the reference cell is the scheduling cell;

situation 2: the scheduling cell belongs to the first cell set and/or the second cell set, and the reference cell is not the scheduling cell, but a cell in the first cell set and/or the second cell set that is different from the scheduling cell; and

situation 3: the scheduling cell does not belong to the first cell set and/or the second cell set, and the reference cell is a cell in the first cell set and/or the second cell set (as the scheduling cell does not belong to the first cell set and/or the second cell set, the reference cell is not the scheduling cell).

The above three situations shall be respectively described in subsequent embodiments.

As described above, in order to save power consumption of the terminal equipment, a cell may be indicated as being deactivated or dormant. It should be noted that being indicated as being dormant and/or deactivated below includes that: a cell is indicated as being deactivated, is unable to be indicated as being dormant when it is deactivated, and is able to be indicated as being dormant when it is activated. For the convenience of explanation below, some configurations and indications related to deactivation or dormancy shall be explained first. For a cell (such as an Scell; however, it is not limited thereto), its corresponding serving cell configuration information may or may not include a fifth higher layer parameter (e.g. DormantBWP-Config-r16, or dormantBWP-Id) used to configure a dormant BWP (or, in other words, used to configure a dormant BWP ID) (for example, it indicates an ID of a BWP serving as a dormant BWP in the cell), and/or a sixth higher layer parameter (e.g. firstWithdeactivatedTimeBWP-Id-r16) used to configure an ID of a BWP to be activated when a DCI for indicating SCell dormancy is received within an activation time (the DCI indicates that the terminal equipment uses a non-dormant BWP, such as leaving Scell dormancy), and/or a seventh higher layer parameter (e.g. dormancyGroupWithdeactivatedTime-r16) used to indicate an ID of an SCell group (dormant within the activation time) (or a dormancy group) to which the cell belongs, for example, the seventh higher layer parameter includes a fifteenth higher layer parameter (e.g. DormancyGroupID-r16) for configuring a dormancy group ID, and/or a ninth higher layer parameter (e.g. firstOutsideActiveTimeBWP-Id-r16) for configuring an ID of a BWP to be activated when a DCI for indicating SCell dormancy is received out of the activation time. Being configured with a dormant BWP and/or a dormancy group ID in the following text refers to being configured/provided with the fifth higher layer parameter and/or the sixth higher layer parameter and/or the seventh higher layer parameter and/or the ninth higher layer parameter and/or the fifteenth higher layer parameter (the serving cell configuration information includes/has/provides the fifth higher layer parameter and/or the sixth higher layer parameter and/or the seventh higher layer parameter and/or the ninth higher layer parameter and/or the fifteenth higher layer parameter).

In some embodiments, the cell is dormant, that is, the cell is in a dormant state or has entered a dormant state, which includes that: an active downlink BWP (active DL BWP) of the cell is a dormant BWP (and the cell is an activated Scell). A potentially dormant cell includes a cell configured with a dormant BWP and/or a dormancy group ID; however, it is not limited thereto. Being indicated as being dormant includes being indicated as being dormant by DCI, such as being indicated as being dormant by DCI format 1_1 or 0_1 or 1_3 or 0_3, such as being indicated as being dormant by the fifth information field (Scell dormancy indication) and/or one or more first information fields of the above DCI format, and a specific mode of indication includes per Scell group indication or per Scell indication; however, it is not limited thereto.

For example, for the indication per Scell group, the fifth information field includes a first bitmap, each bit in the first bitmap corresponding respectively to an Scell group and/or a dormancy group ID. MSB to LSB of the fifth information field or the first bitmap correspond to a first Scell group to a last Scell group in an ascending order of dormancy group IDs. Wherein, the above Scell group is identified by a dormancy group ID. When a value of a bit in the first bitmap is 0, it indicates to activate a DL BWP (provided by the fifth higher layer parameter) for a UE of each activated SCell in a configured corresponding SCell group; when a value of a bit in the first bitmap is 1, when a current activated DL BWP is a dormant DL BWP, it indicates to activate a DL BWP (provided by the sixth higher layer parameter) for a UE of each activated SCell in a configured corresponding SCell group; and when a current activated DL BWP is not a dormant DL BWP, it indicates the current activated DL BWP for a UE of each activated SCell in a configured corresponding SCell group. The terminal equipment sets the activated DL BWP to be the indicated activated DL BWP.

For example, for the indication per Scell, the fifth information field and/or one or more first information fields include(s)/provide(s) a second bitmap, each bit in the second bitmap corresponding respectively to an Scell. MSB to LSB of the fifth information field and/or one or more other information fields or the second bitmap correspond to Scells with Scell indices from lowest to highest in an ascending order of Scell indices. The Scells to which the second bitmap corresponds include Scells configured with dormant BWPs and/or dormancy group IDs, and/or Scells not configured with dormant BWP and/or dormancy group ID. The number of bits included in the second bitmap is determined by the number of the Scells, and the number of the Scells refers to the number of the Scells configured with dormant BWPs and/or dormancy group IDs (only the Scells configured with dormant BWPs and/or dormancy group IDs are counted), or refers to the number of configured Scells (all Scells are counted regardless of whether an Scell is configured with a dormant BWP and/or a dormancy group ID ). The second bitmap is composed of respective parts or all of bits in the fifth information field and/or information fields in the one or more the first information fields. For example, (if the first DCI format and/or the second DCI format include(s) a fourth information field and/or the cell scheduled by the DCI is configured by a higher layer parameter,) if all bits in one or more information blocks of an FDRA field are set to be the above specific value, all or a part of bits in information blocks of corresponding/identical sequence numbers in the above one or more first information fields (or an information block corresponding to the one information block in the FDRA field) are used to provide the second bitmap (other information blocks are used to schedule PDSCHs/PUSCHs on a corresponding cell) (that is, at this time, the FDRA field is further used to indicate which information blocks in other information fields are used to indicate Scell dormancy or provide the second bitmap). For example, according to positions of the part or all of bits in the information fields in the information fields (or an order of listing them) and/or positions of the information fields in a corresponding DCI format (or an order of listing them), the part or all of bits in the information fields serve front to back as bits in the second bitmap from MSB to LSB. For example, {MSB to LSB of a first one of information blocks used to provide the second bitmap in an MCS field for TB1, MSB to LSB of a first one of information blocks used to provide the second bitmap in an NDI field for TB1, MSB to LSB of a first one of information blocks used to provide the second bitmap in an RV field for TB1, MSB to LSB of a first one of information blocks used to provide the second bitmap in an HARQ number field, MSB to LSB of a second one of information blocks used to provide the second bitmap in the MCS field for TB1, MSB to LSB of a second one of information blocks used to provide the second bitmap in the NDI field for TB1, MSB to LSB of a second one of information blocks used to provide the second bitmap in an RV field for TB1, MSB to LSB of a second one of information blocks used to provide the second bitmap in the HARQ number field, and so on} are sequentially included. For another example, {MSB to LSB of a first one of information blocks used to provide the second bitmap in an MCS field for TB1, MSB to LSB of a second one of information blocks used to provide the second bitmap in the MCS field for TB1, ... and so on, MSB to LSB of a first one of information blocks used to provide the second bitmap in an NDI field for TB1, MSB to LSB of a second one of information blocks used to provide the second bitmap in the NDI field for TB1, ... and so on, MSB to LSB of a first one of information blocks used to provide the second bitmap in an RV field for TB1, MSB to LSB of a second one of information blocks used to provide the second bitmap in the RV field for TB1,... and so on, MSB to LSB of a first one of information blocks used to provide the second bitmap in an HARQ number field, MSB to LSB of a second one of information blocks used to provide the second bitmap in the HARQ number field... and so on} are sequentially included. When a value of a bit of the second bitmap is 0, it indicates to activate a DL BWP (provided by the fifth higher layer parameter) for a UE corresponding to the activated SCell; when a value of a bit of the second bitmap is 1, when a current activated DL BWP is a dormant DL BWP, it indicates to activate a DL BWP (provided by the sixth higher layer parameter) for a UE corresponding to the activated SCell; and when the current activated DL BWP is not a dormant DL BWP, it indicates the current activated DL BWP for a UE corresponding to the activated SCell. The terminal equipment sets the activated DL BWP to be an indicated activated DL BWP.

In the above embodiment, one or more first information fields include one or more of a modulation and coding scheme, a new data indicator, redundancy version, an HARQ process number, antenna ports, and DMRS sequence initialization, and may further include but are not limited to at least one of the following information fields: for the first DCI format: an identifier for a DCI format, a bandwidth part indicator, time domain resource assignment, virtual resource block to physical resource mapping (VRB-to-PRB mapping), a physical resource block (PRB) bundling size indicator, a rate matching indicator, ZP CSI-RS trigger, a downlink assignment index, a TPC command for a scheduled PUCCH, a PUCCH resource indicator, a PDSCH-to-HARQ_feedback timing indicator, an HARQ-ACK retransmission indicator, a transmission configuration indication, an SRS request, an SRS offset indicator, a priority indicator, ChannelAccess-CPext, a minimum applicable scheduling offset indicator, a PDCCH monitoring adaptation indication, a PUCCH cell indicator; for the second DCI format: an identifier for a DCI format, a bandwidth part indicator, time domain resource assignment, a frequency hopping flag, a TPC command for a scheduled PUCCH, an SRS resource indicator, precoding information and number of layers, an SRS request, an SRS offset indicator, a CSI request, PTRS-DMRS association, a UL-SCH indicator, an open-loop power control parameter set indication, a priority indicator, ChannelAccess-CPext, a minimum applicable scheduling offset indicator, and a PDCCH monitoring adaptation indication, which shall not be enumerated herein any further.

In some embodiments, the cell is deactivated, that is, the cell is in a deactivated state, and the cell is indicated as being active or inactive or activated or deactivated in a manner as follows: an SCell activation/deactivation MAC CE or an enhanced SCell activation/deactivation MAC CE is received, and according to a corresponding indication for the cell, the cell is activated or deactivated; or, an SCell deactivation timer of the cell expires, and the cell is deactivated; or, when the cell is configured with sCellState (activated) in Scell configuration (i.e. when the cell is initially configured or added), the cell is activated; otherwise, the cell is deactivated; or, upon receiving SCG-state, an SCell of the SCG is deactivated, and if the cell belongs to the SCG, the cell is deactivated.

When the cell is activated, a DL BWP configured/provided by a tenth higher layer parameter (firstActiveDownlinkBWP-Id) and a UL BWP configured/provided by a sixteenth higher layer parameter (firstActiveUplinkBWP-Id) are activated.

In some embodiments, the cell that may potentially be dormant and/or deactivated may only be an Scell; however, this disclosure is not limited thereto.

In some embodiments, the terminal equipment does not necessarily monitor PDCCHs on the cell (Scell) or the dormant BWP, or does not necessarily monitor PDCCHs for the cell (Scell) or the dormant BWP, and at the same time, the terminal equipment does not receive or transmit some other channels or signals on the dormant BWP, such as PDSCHs/DL-SCHs, SRSs, PUSCHs/UL-SCHs, CG-PUSCHs, RACHs, and PUCCHs, etc. However, upon being configured, the terminal continues to perform channel state information (CSI) measurement, automatic gain control (AGC) and beam management (according to the configuration), such as performing beam failure detection for the Scell and performing beam failure recovery upon detecting a beam failure.

In some embodiments, when a cell is deactivated, the terminal equipment does not receive PDSCHs or PDCCHs of the cell, nor does it perform uplink transmission and CQI measurement. When a cell is activated, the terminal equipment will receive PDSCHs and PDCCHs (if the UE is configured to monitor the PDCCHs in/from the cell), and expect to perform CQI measurement. The network device (NG-RAN) ensures that when a PUCCH SCell (an Scell configured with PUCCHs) is deactivated, an SCell of a secondary PUCCH group (its PUCCH signaling is associated with PUCCHs on the PUCCH SCell) is not activated. The network device (NG-RAN) ensures that an SCell mapped to the PUCCH SCell is deactivated before changing or deleting the PUCCH SCell. When a serving cell set is reconfigured, an SCell newly added to the set is initially activated or deactivated (according to the above configuration of sCellState), and remains in the set (unchanged or reconfigured) with its activation state unchanged.

In some embodiments, the scheduling cell may be a potentially dormant and/or deactivated cell, or, it may not be (should not be) a potentially dormant and/or deactivated cell, or, in other words, the terminal equipment does not expect that the scheduling cell is a potentially dormant and/or deactivated cell (a potentially dormant and/or deactivated cell is unable to be (expected) a scheduling cell), for example, the terminal equipment does not expect that the scheduling cell is configured with a dormant BWP and/or dormancy group ID. Or, the network device (NR-RAN) ensures that the scheduling cell is not a potentially dormant and/or deactivated cell. Or, the scheduling cell is not (should not be) configured with a dormant BWP and/or a dormancy group ID.

In some embodiments, the reference cell may be a potentially dormant and/or deactivated cell. Or, the reference cell may not (should not) be a potentially dormant and/or deactivated cell, or the terminal equipment does not expect that the reference cell is a potentially dormant and/or deactivated cell (a potentially dormant and/or deactivated cell is unable to be (expected) a reference cell), or the network device (NR-RAN) ensures that the reference cell is not a potentially dormant and/or deactivated cell. For example, the terminal equipment does not expect that the reference cell is configured with a dormant BWP and/or dormancy group ID. Or, the reference cell is not (should not be) configured with a dormant BWP and/or a dormancy group ID. Or, the terminal equipment does not expect that a reference cell corresponding to the first cell set and/or the second cell set is a potentially dormant and/or deactivated cell (a potentially dormant and/or deactivated cell is not (expected to be) a reference cell of the first cell set and/or the second cell set).

In some embodiments, the terminal equipment does not expect that the first cell set and/or the second cell set include(s) a potentially dormant and/or deactivated cell (a potentially dormant and/or deactivated cell is not (expected to be) a cell in the first cell set and/or the second cell set). Or, in other words, the network device (NR-RAN) ensures that the first cell set and/or the second cell set do(es) not include a potentially dormant and/or deactivated cell. Or, in other words, a cell in the first cell set and/or the second cell set is not (should not be) a potentially dormant and/or deactivated cell.

In some embodiments, the scheduling cell may be indicated as being dormant and/or deactivated, or, may (should) not be indicated as being dormant and/or deactivated, or, in other words, the terminal equipment does not expect that the scheduling cell is indicated as being dormant and/or deactivated. Or, in other words, the network device (NR-RAN) ensures that the scheduling cell is not indicated as being dormant and/or deactivated.

In some embodiments, the reference cell may be indicated as being dormant and/or deactivated, or, may (should) not be indicated as being dormant and/or deactivated, or, in other words, the terminal equipment does not expect that the reference cell is indicated as being dormant and/or deactivated (a cell indicated as being dormant and/or deactivated is not (expected to be) a reference cell). Or, in other words, the network device (NR-RAN) ensures that the reference cell is not indicated as being dormant and/or deactivated.

In some embodiments, the terminal equipment does not expect that (all or a part of) cells in the first cell set and/or the second cell set are indicated as being dormant and/or deactivated (a cell indicated as being dormant and/or deactivated is not (expected to be) a cell in the first cell set and/or the second cell set). Or, in other words, the network device (NR-RAN) ensures that (all or a part of) cells in the first cell set and/or the second cell set are not indicated as being dormant and/or deactivated.

In some embodiments, if the scheduling cell does not belong to the first cell set and/or the second cell set, the reference cell may (should) not be indicated as being dormant and/or deactivated, or in other words, the terminal equipment does not expect that the reference cell is indicated as being dormant and/or deactivated (a cell indicated as being dormant and/or deactivated is not (expected to be) a reference cell). Or, the terminal equipment does not expect that a reference cell (corresponding to) of the first cell set and/or the second cell set is indicated as being dormant and/or deactivated (a cell indicated as being dormant and/or deactivated is not (expected to be) a reference cell in the first cell set and/or the second cell set). Or, in other words, the network device (NR-RAN) ensures that the reference cell is not indicated as being dormant and/or deactivated. Or, the network device (NR-RAN) ensures that a reference cell (corresponding to) of the first cell set and/or the second cell set is not indicated as being dormant and/or deactivated.

In some embodiments, the scheduling cell is dormant and/or deactivated, or the scheduling cell is not (should not be) dormant and/or deactivated, or the terminal equipment does not expect that the scheduling cell is dormant and/or deactivated (a dormant and/or deactivated cell is not (expected to be) a scheduling cell). Or, in other words, the network device (NR-RAN) ensures that the scheduling cell is non-dormant and/or deactivated.

In some embodiments, the reference cell is dormant and/or deactivated, or the reference cell is not (should not be) dormant and/or deactivated, or in other words, the terminal equipment does not expect that (all or a part of) cells in the first cell set and/or the second cell set are dormant and/or deactivated (a dormant and/or deactivated cell is not (expected to be) a cell in the first cell set and/or the second cell set). Or, the terminal equipment does not expect that a reference cell (corresponding to) in the first cell set and/or the second cell set is dormant and/or deactivated (a dormant and/or deactivated cell is not (expected to be) a reference cell in the first cell set and/or the second cell set). Or, in other words, the network device (NR-RAN) ensures that (all or a part of) cells in the first cell set and/or the second cell set are non-dormant and/or deactivated. Or, a reference cell (corresponding to) in the first cell set and/or the second cell set is non-dormant and/or deactivated.

In some embodiments, if one cell in the first cell set and/or the second cell set is dormant and/or deactivated, the terminal equipment does not expect that the first DCI format and/or the second DCI format schedule(s) the one cell or schedule(s) a combination of cells including the one cell (the one cell or the combination of cells including the one cell is (expected) not scheduled by the first DCI format and/or the second DCI format). Or, in other words, the network device (NR-RAN) ensures that the first DCI format and/or the second DCI format do(es) not schedule the one cell or the combination of cells including the one cell.

The first DCI format and/or the second DCI format and monitoring and reception of the PDCCH carrying the DCI format in a case where the scheduling cell and/or the reference cell is/are related to deactivation and/or dormancy or not shall be described below.

In some embodiments, (if) the scheduling cell and/or the reference cell (corresponding to) of the first cell set and/or the second cell set and/or (all or a part of) cells of the first cell set is/are dormant and/or deactivated, and/or (all or a part of) cells of the second cell set are dormant and/or deactivated, the terminal equipment does not monitor and/or does not receive the first DCI format, and/or does not monitor and/or does not receive the second DCI format.

In some embodiments, when (the terminal equipment expects that) the scheduling cell and/or the reference cell of the first cell set and/or the second cell set are dormant and/or deactivated, cells in the first cell set and/or the second cell set (which are unable to be scheduled by other cells) are not (should not be) active and non-dormant. When the network device (NR-RAN) ensures that the scheduling cell and/or the reference cell of the first cell set and/or the second cell set are dormant and/or deactivated, the cells in the first cell set and/or the second cell set (which are unable to be scheduled by other cells) are not (should not be) active and non-dormant.

In some embodiments, (the terminal equipment expects that) the scheduling cell and/or the reference cell of the first cell set and/or the second cell set are not configured with an Scell deactivation timer (sCellDeactivationTimer), or, the network device (NR-RAN) ensures that the scheduling cell and/or the reference cell of the first cell set and/or the second cell set are not configured with an Scell deactivation timer (sCellDeactivationTimer) or that the scheduling cell and/or the reference cell of the first cell set and/or the second cell set are configured with an Scell deactivation timer that is infinity, i.e.

disabling timer-based deactivation of an SCell, so that deactivation of the SCell is unable to be controlled based on the timer.

In some embodiments, the scheduling cell and/or the reference cell (corresponding to) of the first cell set and/or the second cell set and/or (all or a part of) the cells in the first cell set are active and non-dormant, and/or (all or a part of) the cells in the second cell set are active and non-dormant; the terminal equipment monitors and/or receives the first DCI format, and/or the receiver monitors and/or receives the second DCI format.

In some embodiments, (if) the scheduling cell belongs to the first cell set and/or the second cell set and the terminal equipment is only provided with search space sets for the PDCCH candidates (or corresponding to the first DCI format and/or the second DCI format) in the scheduling cell, the reference cell is the scheduling cell, and the terminal equipment counts based on a reference cell for size(s) of the first DCI format and/or the second DCI format and/or PDCCH candidates used to detect the first DCI format and/or the second DCI format and/or corresponding non-overlapping control channel elements (CCEs).

In some embodiments, (if) (the scheduling cell does not belong to the first cell set and/or the second cell set) the terminal equipment is provided with search space sets with a same search space identifier (searchSpaceId) for the first DCI format and/or the second DCI format in the scheduling cell and one cell (a serving cell) in the first cell set and/or the second cell set, the reference cell is the one cell, and the terminal equipment counts based on a reference cell for size(s) of the first DCI format and/or the second DCI format and/or PDCCH candidates used to detect the first DCI format and/or the second DCI format and/or corresponding non-overlapping control channel elements (CCEs) ((counts of) the size(s) corresponding to the first DCI format and/or the second DCI format and/or the PDCCH candidates and/or the non-overlapping CCEs are marked on the reference cell).

In some implementations, (if) the scheduling cell belongs to or does not belong to the first cell set and/or the second cell set, and/or the scheduling cell is different from the reference cell of the first cell set, and the scheduling cell is (active and) non-dormant, (if) the reference cell (corresponding to) of the first cell set and/or the second cell set is dormant, the terminal equipment counts based on the scheduling cell for size(s) of the first DCI format and/or the second DCI format and/or PDCCH candidates used to detect the first DCI format and/or the second DCI format and/or corresponding non-overlapping CCEs ((counts of) the size(s) corresponding to the first DCI format and/or the second DCI format and/or the PDCCH candidates and/or the non-overlapping CCEs are marked on the scheduling cell).

Following description is given by way of examples.

In some embodiments, if the scheduling cell and the reference cell are (both) dormant and/or deactivated, the UE does not monitor and/or does not receive the first DCI format and/or the second DCI format (in the scheduling cell).

In some embodiments, if the scheduling cell or the reference cell is dormant and/or deactivated, the UE does not monitor and/or does not receive the first DCI format and/or the second DCI format (in the scheduling cell).

In some embodiments, if the scheduling cell or the reference cell is (active and) non-dormant, the UE monitors and/or receives the first DCI format and/or the second DCI format (in the scheduling cell).

In some embodiments, if all cells in the first cell set and/or the second cell set are dormant and/or deactivated, the UE does not monitor and/or does not receive the first DCI format and/or the second DCI format (in the scheduling cell).

In some embodiments, if at least one cell in the first cell set and/or the second cell set is (active and) non-dormant, (and the scheduling cell and/or the reference cell is (active and) non-dormant) the UE monitors and/or receives the first DCI format and/or the second DCI format (in the scheduling cell), and marks (counts of) the size(s) corresponding to the first DCI format and/or the second DCI format and/or the PDCCH candidates and/or the non-overlapping CCEs on the scheduling cell (or, in other words, the UE assumes that the scheduling cell is the reference cell).

In some embodiments, if the reference cell is (active and) non-dormant and the scheduling cell is dormant and/or deactivated, the UE monitors and/or receives the first DCI format and/or the second DCI format, and marks (counts of) the size(s) corresponding to the first DCI format and/or the second DCI format and/or the PDCCH candidates and/or the non-overlapping CCEs on the reference cell.

In some embodiments, if the scheduling cell is (active and) non-dormant and the reference cell is dormant and/or deactivated, the UE monitors and/or receives the first DCI format and/or the second DCI format, and marks (counts of) the size(s) corresponding to the first DCI format and/or the second DCI format and/or the PDCCH candidates and/or the non-overlapping CCEs on the reference cell, or marks the size(s) corresponding to the first DCI format and/or the second DCI format and/or the PDCCH candidates and/or the non-overlapping CCEs on the scheduling cell (or, in other words, at this time, the UE assumes that the scheduling cell is the reference cell).

In some embodiments, if the scheduling cell belongs to the first cell set and/or the second cell set, the reference cell is the scheduling cell and the cell is dormant and/or deactivated, the UE does not monitor and/or does not receive the first DCI format and/or the second DCI format (in the scheduling cell). Or, if the reference cell is a scheduling cell and the cell is dormant and/or deactivated, the UE does not monitor and/or does not receive the first DCI format and/or the second DCI format used for scheduling (the cells in) the first cell set and/or the second cell set.

In some embodiments, if the scheduling cell belongs to the first cell set and/or the second cell set, the reference cell is not the scheduling cell and both the reference cell and the scheduling cell are dormant and/or deactivated, the UE does not monitor and/or does not receive the first DCI format and/or the second DCI format (in the scheduling cell).

In some embodiments, if the scheduling cell belongs to the first cell set and/or the second cell set, the reference cell is not the scheduling cell (the scheduling cell is dormant or non-dormant), and the reference cell is (active and) non-dormant, the UE monitors and/or receives the first DCI format and/or the second DCI format, and marks (counts of) the size(s) corresponding to the first DCI format and/or the second DCI format and/or the PDCCH candidates and/or the non-overlapping CCEs on the reference cell.

In some embodiments, if the scheduling cell belongs to the first cell set and/or the second cell set, the reference cell is not the scheduling cell, the scheduling cell is dormant and/or deactivated, and the reference cell is (active and) non-dormant, the UE monitors and/or receives the first DCI format and/or the second DCI format, and marks (counts of) the size(s) corresponding to the first DCI format and/or the second DCI format and/or the PDCCH candidates and/or the non-overlapping CCEs on the reference cell.

In some embodiments, if the scheduling cell belongs to the first cell set and/or the second cell set, the reference cell is not the scheduling cell, (the reference cell is dormant and/or deactivated or is (active and) non-dormant), and the scheduling cell is (active and) non-dormant), the UE monitors and/or receives the first DCI format and/or the second DCI format, and marks (counts of) the size(s) corresponding to the first DCI format and/or the second DCI format and/or the PDCCH candidates and/or the non-overlapping CCEs on the reference cell.

In some embodiments, if the scheduling cell belongs to the first cell set and/or the second cell set, the reference cell is not the scheduling cell, the reference cell is dormant and/or deactivated (and the scheduling cell is (active and) non-dormant), the UE monitors and/or receives the first DCI format and/or the second DCI format, and marks (counts of) the size(s) corresponding to the first DCI format and/or the second DCI format and/or the PDCCH candidates and/or the non-overlapping CCEs on the scheduling cell (or, in other words, the UE assumes that the scheduling cell is the reference cell).

In some embodiments, if the scheduling cell does not belong to the first cell set and/or the second cell set, and the reference cell is dormant and/or deactivated (and the scheduling cell is dormant and/or deactivated), the UE does not monitor and/or does not receive the first DCI format and/or the second DCI format (on the scheduling cell).

In some embodiments, if the scheduling cell does not belong to the first cell set and/or the second cell set (the scheduling cell is dormant and/or deactivated or (active and) non-dormant), and the reference cell is (active and) non-dormant, the UE monitors and/or receives the first DCI format and/or the second DCI format, and marks (counts of) the size(s) corresponding to the first DCI format and/or the second DCI format and/or the PDCCH candidates and/or the non-overlapping CCEs on the reference cell.

In some embodiments, if the scheduling cell does not belong to the first cell set and/or the second cell set, the scheduling cell is dormant and/or deactivated and the reference cell is (active and) non-dormant, the UE monitors and/or receives the first DCI format and/or the second DCI format, and marks (counts of) the size(s) corresponding to the first DCI format and/or the second DCI format and/or the PDCCH candidates and/or the non-overlapping CCEs on the reference cell.

In some embodiments, if the scheduling cell does not belong to the first cell set and/or the second cell set, the reference cell is dormant and/or deactivated and the scheduling cell is (active and) non-dormant, the UE monitors and/or receives the first DCI format and/or the second DCI format, and marks (counts of) the size(s) corresponding to the first DCI format and/or the second DCI format and/or the PDCCH candidates and/or the non-overlapping CCEs on the scheduling cell.

In some embodiments, if the scheduling cell does not belong to the first cell set and/or the second cell set, the reference cell is dormant and/or deactivated, and the scheduling cell is (active and) non-dormant, the UE monitors and/or receives the first DCI format and/or the second DCI format, and marks the size(s) corresponding to the first DCI format and/or the second DCI format and/or the PDCCH candidates and/or the non-overlapping CCEs on the scheduled cell.

In some embodiments, if the reference cell is not the scheduling cell and is dormant and/or deactivated (and the scheduling cell is (active and) non-dormant (the scheduling cell belongs to or does not belong to the first cell set and/or the second cell set)), the UE monitors and/or receives the first DCI format and/or the second DCI format, and marks the size(s) corresponding to the first DCI format and/or the second DCI format and/or the PDCCH candidates and/or the non-overlapping CCEs on the scheduling cell.

Scheduling a dormant and/or deactivated cell shall be described below.

In some embodiments, the first cell set and/or the second cell set may include a potentially dormant and/or deactivated cell. Or, the first cell set and/or the second cell set may not/should not include a potentially dormant and/or deactivated cell.

In some embodiments, if the first cell set and/or the second cell set include(s) a potentially dormant and/or deactivated cell, the potentially dormant and/or deactivated cell may be indicated as being dormant and/or deactivated by the first DCI format and/or the second DCI format used to schedule cells in the first cell set and/or the second cell set, or may be indicated as being dormant and/or deactivated by other DCI formats or other first DCI formats and/or second DCI formats (used to schedule cells in other cell sets (with different cell set identifiers)). Or, the potentially dormant and/or deactivated cell may not be indicated as being dormant and/or deactivated by the first DCI format and/or second DCI format used to schedule cells in the first cell set and/or the second cell set, and may be indicated as being dormant and/or deactivated by other DCI formats or other first DCI formats and/or second DCI formats (used to schedule cells in other cell sets (with different cell set identifiers)). Or, the potentially dormant and/or deactivated cell may not be indicated as being dormant and/or deactivated (or, in other words, the UE does not expect that the cell is (indicated as being) dormant and/or deactivated).

In some embodiments, if the first cell set and/or the second cell set include(s) a dormant and/or deactivated cell, the dormant and/or deactivated cell may be used to schedule the first DCI format and/or the second DCI format scheduling the cells in the first cell set and/or the second cell set, or, the cell may not be used to schedule the first DCI format and/or the second DCI format scheduling the cells in the first cell set and/or the second cell set (including that the UE does not expect that the scheduled cells include the dormant and/or deactivated cell). Or, for the received first DCI format and/or second DCI format, the scheduled cells may include the dormant and/or deactivated cell (including a cell indicated as being dormant and/or deactivated by the first DCI format and/or second DCI format or another DCI). Or, the scheduled cells may not/should not include the dormant and/or deactivated cell (including that the UE does not expect that the scheduled cells include the dormant and/or deactivated cell).

In some embodiments, (if) the first cell set and/or the second cell set include(s) a dormant and/or deactivated cell, the UE does not determine the size(s) of the first DCI format and/or the second DCI format based on the dormant and/or deactivated cell.

For example, if the first cell set and/or the second cell set include a dormant cell, the UE does not determine the number of information bits in the first DCI format and/or the second DCI format based on the dormant cell. For example, for the first DCI format, if the third higher layer parameter is configured, a size for the first DCI format is determined by configuration of a corresponding (DL) BWP of a (scheduled) cell in an entry in entries in the third higher layer parameter that may result in a largest size. If the third higher layer parameter is not configured, the size of the first DCI format is determined by configuration of a corresponding (DL) BWP of a cell in the first cell set and/or the second cell set. Wherein, for a dormant cell, it is excluded from the above entries or the first cell set and/or the second cell set. Likewise, for the second DCI format, if the fourth higher layer parameter is configured, a size of the second DCI format is determined by configuration of a corresponding (UL) BWP of a (scheduled) cell in an entry in entries in the fourth higher layer parameter that may result in a largest size. If the fourth higher layer parameter is not configured, the size of the second DCI format is determined by configuration of corresponding (UL) BWPs of (all) cells in the cell. Wherein, for a dormant cell, it is excluded from the above entries or the first cell set and/or the second cell set.

In some embodiments, (if) the first cell set and/or the second cell set include(s) dormant cells and/or a deactivated cells, the UE determines the size(s) (the number of the information bits) of the first DCI format and/or the second DCI format based on an active (DL/UL) BWP and/or a dormant (DL) BWP and/or a (DL) BWP configured/provided by a sixth higher layer parameter and/or a (DL) BWP configured/provided by a ninth higher layer parameter and/or a BWP configured/-provided by a tenth higher layer parameter and/or a BWP configured/provided by a sixteenth higher layer parameter, for the dormant cell; and/or based on a (DL) BWP configured/provided by a tenth higher layer parameter and/or a (UL) BWP configured/provided by a sixteenth higher layer parameter and/or a BWP configured/provided by a sixth higher layer parameter and/or a BWP configured/provided by a ninth higher layer parameter, for the deactivated cell. For example, the UE determines the size (the number of the information bits) of the first DCI format based on the above configured/provided DL BWP, and determines the size (the number of the information bits) of the second DCI format based on the above configured/provided UL BWP. However, the embodiments of this disclosure is not limited thereto, and the size (the number of the information bits) of the first DCI format may be determined based on the above configured/provided UL BWP, and the size (the number of the information bits) of the second DCI format may be determined based on the above configured/provided DL BWP.

For example, regarding the size of DCI format, if the sixth higher layer parameter is provided, the determination is performed based on the BWP configured/provided by the sixth higher layer parameter; otherwise, the determination is performed based on the BWP configured/provided by the ninth higher layer parameter; however, it is not limited thereto. For example, for the first DCI format, if the third higher layer parameter is configured, the size of the first DCI format is determined by configuration of a corresponding (DL) BWP of a (scheduled) cell in an entry in entries in the third higher layer parameter that may result in a largest size. If the third higher layer parameter is not configured, the size of the first DCI format is determined by configuration of corresponding (DL) BWPs of (all) cells in the first cell set. Wherein, for a dormant cell, its corresponding BWP is an active (DL) BWP and/or a dormant BWP and/or is a (DL) BWP configured/provided by the sixth higher layer parameter and/or a (DL) BWP configured/provided by the ninth higher layer parameter. Likewise, for the second DCI format, if the fourth higher layer parameter is configured, the size of the second DCI format is determined by configuration of a corresponding (UL) BWP of a (scheduled) cell in an entry in entries in the fourth higher layer parameter that may result in a largest size. If the fourth higher layer parameter is not configured, the size of the second DCI format is determined by configuration of corresponding (UL) BWPs of (all) cells in the cell set. Wherein, for a dormant cell, its corresponding (UL) BWP is an active (UL) BWP.

In some embodiments, a size of a DCI format is the number of information bits included in the DCI format, and vice versa.

For example, a potentially deactivated cell may also be a potentially dormant cell, and the BWP configured/-provided by the tenth higher layer parameter may or may not be a dormant BWP. If the BWP configured/provided by the tenth higher layer parameter is not a dormant BWP, the size of the first DCI format is determined based on the BWP configured/provided by the tenth higher layer parameter; otherwise, the size of the first DCI format is determined based on the BWP configured/provided by the sixth higher layer parameter and/or the BWP configured/provided by the ninth higher layer parameter.

For example, a potentially deactivated cell may also be a potentially dormant cell, the BWP configured/provided by the sixteenth higher layer parameter is a dormant BWP or not, and if the BWP configured/provided by the sixteenth higher layer parameter is not a dormant BWP, the size of the second DCI format is determined based on the BWP configured/provided by the sixteenth higher layer parameter; otherwise, the size of the second DCI format is determined based on the BWP configured/provided by the sixth higher layer parameter and/or the BWP configured/provided by the ninth higher layer parameter.

For example, for the first DCI format, in the scheduled cell set, if the SCell is deactivated and the tenth higher layer parameter does not set a dormant BWP, the terminal equipment determines the number of information bits of the first DCI format based on the DL BWP provided by the tenth higher layer parameter of the SCell; if the active DL BWP of the SCell is a dormant DL BWP, or if the SCell is deactivated and the tenth higher layer parameter sets a dormant BWP, if the sixth higher layer parameter provides a DL BWP, the terminal equipment determines the number of information bits of the first DCI format based on the DL BWP provided by the sixth higher layer parameter of the SCell; otherwise (i.e. if no sixth higher layer parameter is provided for the SCell), the terminal equipment determines the number of information bits of the first DCI format based on the DL BWP provided by the ninth higher layer parameter.

For example, for the second DCI format, in the scheduled cell set, if the SCell is deactivated and the tenth higher layer parameter does not set a dormant BWP, the terminal equipment determines the number of information bits of the first DCI format based on the DL BWP provided by the tenth higher layer parameter of the SCell; if the active DL BWP of the SCell is a dormant DL BWP, or if the SCell is deactivated and the tenth higher layer parameter sets a dormant BWP, if the sixth higher layer parameter provides a DL BWP, the terminal equipment determines the number of information bits of the first DCI format based on the DL BWP provided by the sixth higher layer parameter of the SCell; otherwise (i.e. if no sixth higher layer parameter is provided for the SCell), the terminal equipment determines the number of information bits of the second DCI format based on the DL BWP provided by the ninth higher layer parameter.

For example, for the second DCI format, in the scheduled cell set, if the SCell is deactivated, the terminal equipment determines the number of information bits of the second DCI format based on the UL BWP provided by the sixteenth higher layer parameter, and if the active DL BWP of the SCell is a dormant DL BWP, the terminal equipment determines the number of information bits of the second DCI format based on the active UL BWP. If the active DL BWP of an SCell is a dormant DL BWP, the UE determines the number of information bits in DCI format 0_3 (carried by PDCCH in the scheduling cell) based on the active UL BWP.

In some embodiments, (if) the first cell set and/or the second cell set include(s) a dormant cell and/or a deactivated cell, and/or the cell(s) scheduled by the first DCI format and/or the second DCI format include(s) a dormant cell and/or a deactivated cell, and the UE determines sizes of information blocks corresponding to the dormant cell and/or the deactivated cell in a first part of the first information fields in the first DCI format and/or the second DCI format based on an active (DL/UL) BWP and/or a dormant (DL) BWP and/or a (DL) BWP configured/provided by the sixth higher layer parameter and/or a (DL) BWP configured/provided by the ninth higher layer parameter and/or a BWP configured/provided by a tenth higher layer parameter and/or a BWP configured/provided by a sixteenth higher layer parameter for the dormant cell; and/or based on a BWP configured/provided by the tenth higher layer parameter and/or a (UL) BWP configured/-provided by the sixteenth higher layer parameter and/or a BWP configured/provided by the sixth higher layer parameter and/or a BWP configured/provided by the ninth higher layer parameter, for the deactivated cell. The above first part of the first information fields includes frequency domain resource assignment and/or PTRS-DMRS association and/or an SRS resource indicator and/or precoding information and number of layers and/or antenna ports. For example, if the sixth higher layer parameter is provided, the sizes of the above information blocks are determined based on the BWP configured/provided by the sixth higher layer parameter; otherwise, the sizes of the above information blocks are determined based on the BWP configured/provided by the ninth higher layer parameter; however, it is not limited thereto.

In some embodiments, (if) the first cell set and/or the second cell set include(s) a dormant cell and/or a deactivated cell, the first DCI format and/or the second DCI format do(es) not include dedicated information bits for the dormant cell and/or deactivated cell.

In some embodiments, (if) the first cell set and/or the second cell set include(s) a dormant cell and/or a deactivated cell, the first part of the first information fields in the first DCI format and/or the second DCI format does not include information blocks corresponding to the dormant cell and/or deactivated cell. The above one or more first part of first information fields include(s) frequency domain resource assignment and/or PTRS-DMRS association and/or an SRS resource indicator and/or precoding information and number of layers and/or antenna ports.

In some embodiments, (if) the first cell set and/or the second cell set include(s) a dormant cell and/or a deactivated cell, and/or the cell(s) scheduled by the first DCI format and/or the second DCI format include(s) a dormant cell and/or a deactivated cell, a second part of the first information fields in the first DCI format and/or the second DCI format is not applied or is applied to the dormant cell and/or deactivated cell, and/or the processor of the terminal equipment ignores scheduling information to which the dormant cell correspond(s). The second part of the first information fields includes a bandwidth part indicator and/or a frequency hopping flag and/or precoding information and number of layers and/or antenna ports and/or a CSI request and/or a beta_offset indicator and/or DMRS sequence initialization and/or a UL-SCH indicator and/or ChannelAccess-CPext-CAPAC and/or an open-loop power control parameter set indication and/or a priority indicator and/or a minimum applicable scheduling offset indicator and/or a PDCCH monitoring adaptation indication and/or ChannelAccess-CPext. For example, the bandwidth part indicator is not applied to the dormant cell, and the terminal equipment switches a (active) (DL and/or UL) BWP of the dormant cell not according to indication of the bandwidth part indicator. Or, the bandwidth part indicator is applied to the dormant cell, and the terminal equipment switches a (active) (DL and/or UL) BWP of the dormant cell according to indication of the bandwidth part indicator, which shall not be illustrated herein one by one any further.

In some embodiments, (if) the first cell set and/or the second cell set include(s) a dormant cell and/or a deactivated cell, and/or the cell(s) scheduled by the first DCI format and/or the second DCI format include(s) a dormant cell and/or a deactivated cell, an information block in a third part of the first information fields in the first DCI format and/or the second DCI format corresponding to the dormant cell and/or deactivated cell is not applied to the dormant cell and/or deactivated cell, and/or the processor of the terminal equipment ignores the information blocks in a third part of the first information fields in the first DCI format and/or the second DCI format corresponding to the dormant cell and/or deactivated cell. The third part of the first information fields includes frequency domain resource assignment and/or PTRS-DMRS association and/or a modulation and coding scheme and/or a new data indicator and/or a redundancy version and/or an HARQ process number and/or a TPC command for scheduled PUSCHs and/or an SRS resource indicator and/or precoding information and number of layers and/or antenna ports. Information blocks in the third part of the first information fields are placed in an ascending order of serving cell indices (of cells in the scheduled cell set or the scheduled cells).

For example, one or more information blocks are included for a frequency domain resource assignment field, and the number of the included information blocks is equal to the number of the scheduled cells (indicated by the third information field or configured by the third higher layer parameter and/or the fourth higher layer parameter) or the number of cells in the scheduled cell set (indicated by the fourth information field or configured by the eleventh higher layer parameter). Information blocks in a frequency domain resource assignment field are placed in an ascending order of the serving cell indices, wherein information block 1 corresponds to (frequency domain resource assignment of) a cell with a smallest serving cell index, or, the number of the included information blocks is equal to or less than the number of cells in the above scheduled cells or scheduled cell set excluding dormant cells. If a cell to which an information block in the frequency domain resource assignment field corresponds is dormant, the UE ignores the information block.

In some embodiments, (if) the first cell set and/or the second cell set include(s) a dormant cell and/or a deactivated cell, and/or the cell(s) scheduled by the first DCI format and/or the second DCI format include(s) a dormant cell and/or a deactivated cell, an index in entries indicated by a fourth part of the first information fields in the first DCI format and/or the second DCI format corresponding to the dormant cell and/or deactivated cell is not applied to the dormant cell and/or deactivated cell, and/or the processor of the terminal equipment ignores the index in entries indicated by a fourth part of the first information fields in the first DCI format and/or the second DCI format corresponding to the dormant cell and/or deactivated cell. The fourth part of the first information fields includes time domain resource assignment and/or an SRS request and/or an SRS offset indicator and/or a rate matching indicator and/or ZP CSI-RS trigger and/or a transmission configuration indication. The indices in the entries are placed in an ascending order of the serving cell indices (of the cells in the scheduled cell set).

In some embodiments, (if) the second cell set includes a dormant cell and/or a deactivated cell, and/or the cell(s) scheduled by the second DCI format include(s) a dormant cell and/or a deactivated cell, the CSI request and/or UL-SCH indicator in the second DCI format is/are applied to a cell with a smallest serving cell index in the cell(s) scheduled by the first DCI format and/or the second DCI format except the dormant cell and/or deactivated cell, and/or the UE transmits a CSI report in a PUSCH of a cell with a smallest serving cell index in cells except the dormant cell and/or deactivated cell (according to the CSI request), and/or the UE transmits or does not transmit the UL-SCH in a PUSCH of a cell with a smallest serving cell index in cells except the dormant cell and/or deactivated cell (according to the UL-SCH indicator).

In some embodiments, if the cell with a smallest serving cell index in the cell(s) scheduled by the second DCI format is dormant or deactivated, the UE ignores the CSI request and/or UL-SCH indicator in the second DCI format.

In some embodiments, if the second DCI format includes the CSI request and/or the UL-SCH indicator, the UE does not expect that the cell(s) scheduled by the second DCI format include(s) a dormant cell and/or a deactivated cell, or the UE does not expect that a cell with a smallest serving cell index in the cell(s) scheduled by the second DCI format is dormant or deactivated.

In some embodiments, (if) the cell(s) scheduled by the first DCI format include(s) a dormant cell and/or a deactivated cell, the UE does not receive a PDSCH in the dormant cell and/or deactivated cell, and/or (if) the cell(s) scheduled by the second DCI format include(s) a dormant cell and/or a deactivated cell, the UE does not transmit a PUSCH in the dormant cell and/or deactivated cell.

The above types of first information fields are illustrative only; however, the embodiments of this disclosure are not limited thereto. For example, other types of first information fields described in the above examples may also be included.

As described above, the network device may use the first DCI format and/or the second DCI format for cell (Scell) dormancy indication. How to indicate is as described above, and shall not be repeated herein any further. How the terminal equipment informs the network device whether it supports cell (Scell) dormancy indication by using the first DCI format and/or the second DCI format shall be described below in detail.

In some embodiments, regarding capability reporting, the method may further include: transmitting by the terminal equipment to the network device, first capability information for indicating that the terminal equipment supports an Scell dormancy indication of the first DCI format (received on an SPcell) and/or second capability information for indicating that the terminal equipment supports an SCell dormancy indication (received in the SPCell)(SCell dormancy indication received on SPCell with DCI format 0_3/1_3), and/or third capability information for indicating that the terminal equipment supports a third DCI format (e.g. DCI format 1_1) (received in the SPcell) and/or a fourth DCI format (e.g. DCI format 0_1) of SCell dormancy indication (SCell dormancy indication received on SPCell with DCI format 0_1/1_1).

In some embodiments, the first capability information and the second capability information may be the same information or different information. For example, the first capability information and the second capability information are the same information, and this information is used to indicate that the terminal equipment supports Scell dormancy indication of the third capability information (received in the SPcell).

In some embodiments, the first capability information and the second capability information are, for example, scellDormancyWithdeactivatedTime-r18, and the third capability information is, for example, scellDormancyWithdeactivatedTime-r16. If the third capability information indicates supporting, the terminal equipment supports one dormant BWP and at least one non-dormant BWP for each carrier. One dormant BWP and the one non-dormant BWP are UE-specific BWPs.

In some embodiments, the first capability information includes (capability) information for indicating that the terminal equipment supports Scell cell dormancy indication per Scell of the first DCI format, and/or (capability) information for indicating that the terminal equipment supports Scell dormancy indication per Scell group of the first DCI format, and the second capability information includes (capability) information for indicating that the terminal equipment supports Scell dormancy indication per Scell of the second DCI format, and/or (capability) information for indicating that the terminal equipment supports Scell dormancy indication per Scell group of the second DCI format.

In some embodiments, the terminal equipment supporting the Scell dormancy indication of the first DCI format or the second DCI format should also support Scell dormancy indication of the third DCI format or the fourth DCI format. For example, the terminal equipment supporting scellDormancyWithdeactivatedTime-r18 should also support scellDormancyWithdeactivatedTime-r16. Or, it is not limited thereto, and the terminal equipment supporting the Scell dormancy indication of the first DCI format or the second DCI format may not support the Scell dormancy indication of the third DCI format or the fourth DCI format.

In some embodiments, if the terminal equipment supports the Scell dormancy indication of the third DCI format or the fourth DCI format and/or the first DCI format or the second DCI format, for each (DL) carrier, the terminal equipment respectively supports one dormant BWP and at least one non-dormant BWP.

In the above embodiment, implementation of the capability report may be implemented independently of or in combination with 201-202, and the embodiments of this disclosure are not limited thereto.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

An advantage of the embodiments of this disclosure exists in that in the case of cell deactivation and/or dormancy, the terminal equipment monitors and/or receives or does not monitor and/or does not receive the DCI format(s) supporting scheduling PDSCHs or PUSCHs of multiple cells and PDSCHs or PUSCHs scheduled by the DCI format(s), thereby saving power consumption of the terminal equipment and improving resource efficiency while achieving multi-carrier enhancement.

Embodiments of a second aspect

The embodiments of this disclosure provide an information transmission method, which shall be described from a network device side, with contents identical to those in the embodiments of the first aspect being not going to be described herein any further.

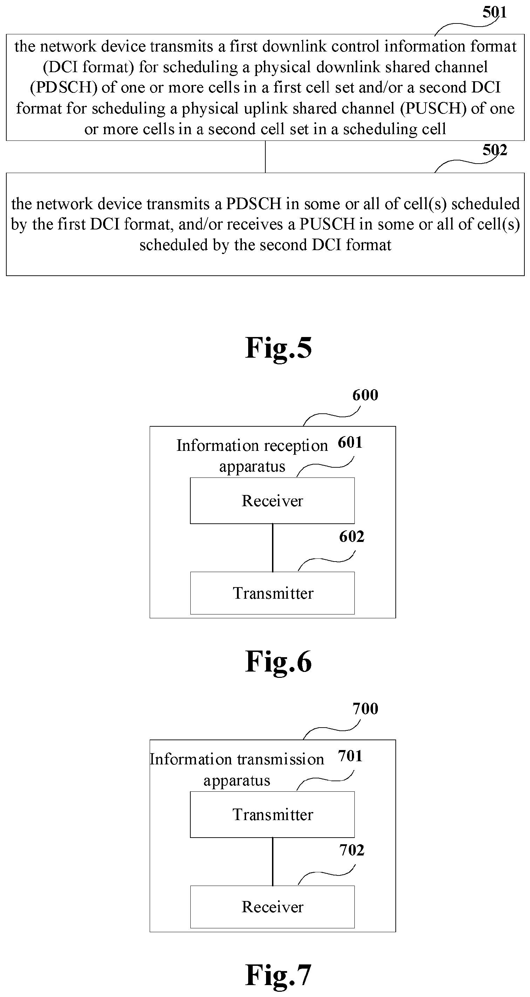

FIG. 5 is a schematic diagram of the information transmission method of the embodiments of this disclosure. As shown in FIG. 5, the method includes:

501: the network device transmits a first downlink control information format (DCI format) for scheduling a physical downlink shared channel (PDSCH) of one or more cells in a first cell set and/or a second DCI format for scheduling a physical uplink shared channel (PUSCH) of one or more cells in a second cell set in a scheduling cell; and

502: the network device transmits a PDSCH in some or all of cell(s) scheduled by the first DCI format, and/or receives a PUSCH in some or all of cell(s) scheduled by the second DCI format.

It should be noted that FIG. 5 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 5.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

Embodiments of a third aspect

The embodiments of this disclosure provide an information reception apparatus. The apparatus may be, for example, a terminal equipment, or one or some components or assemblies configured in the terminal equipment, with contents identical to those in the embodiments of the first aspect being not going to be described herein any further.

FIG. 6 is a schematic diagram of the information reception apparatus of the embodiments of this disclosure. As shown in FIG. 6, the information reception apparatus 600 includes a receiver 601, or includes a receiver 601 and a transmitter 602,

wherein the receiver 601 monitors and/or receives a first downlink control information format (DCI format) for scheduling a physical downlink shared channel (PDSCH) of one or more cells in a first cell set and/or a second DCI format for scheduling a physical uplink shared channel (PUSCH) of one or more cells in a second cell set in a scheduling cell;

and the receiver 601 further receives a PDSCH in some or all of cell(s) scheduled by the first DCI format, and/or the transmitter 602 transmits a PUSCH in some or all of cell(s) scheduled by the second DCI format.

In some embodiments, reference may be made to the embodiments of the first aspect for implementations of the receiver 601 and a transmitter 602, which shall not be described herein any further. The information reception apparatus may further include a processor, and reference may be made to the embodiments of the first aspect for implementation of the processor, which shall not be described herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information reception apparatus 600 may further include other components or modules, and reference may be made to related techniques for particulars of these components or modules.

Furthermore, for the sake of simplicity, connection relationships between the components or modules or signal profiles thereof are only illustrated in FIG. 6. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

Embodiments of a fourth aspect

The embodiments of this disclosure provide an information transmission apparatus. The apparatus may be, for example, a network device, or one or some components or assemblies configured in the network device, with contents identical to those in the embodiments of the second aspect being not going to be described herein any further.

FIG. 7 is a schematic diagram of the information transmission apparatus of the embodiments of this disclosure. As shown in FIG. 7, the information transmission apparatus 700 includes a transmitter 701, or includes a transmitter 701 and a receiver 702,

> wherein the transmitter 701 transmits a first downlink control information format (DCI format) for scheduling a physical downlink shared channel (PDSCH) of one or more cells in a first cell set and/or a second DCI format for scheduling a physical uplink shared channel (PUSCH) of one or more cells in a second cell set in a scheduling cell;
> and the transmitter 701 further transmits a PDSCH in some or all of cell(s) scheduled by the first DCI format, and/or the receiver 702 receives a PUSCH in some or all of cell(s) scheduled by the second DCI format.

In some embodiments, reference may be made to the embodiments of the first aspect for implementations of the receiver 702 and the transmitter 701, which shall not be described herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information transmission apparatus 700 may further include other components or modules, and reference may be made to related techniques for particulars of these components or modules.

Furthermore, for the sake of simplicity, connection relationships between the components or modules or signal profiles thereof are only illustrated in FIG. 7. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

Embodiments of a fifth aspect

The embodiments of this disclosure provide a communication system, and reference may be made to FIG. 1, with contents identical to those in the embodiments of the first to fourth aspects being not going to be described herein any further.

In some embodiments, the communication system 100 may at least include a network device 101 and/or a terminal equipment 102, wherein the network device 101 includes the information transmission apparatus 700 in the embodiments of the fourth aspect, and the terminal equipment 102 includes the information reception apparatus 600 in the embodiments of the third aspect, which shall not be described herein any further.

The embodiments of this disclosure further provide a network device, which may be, for example, a base station. However, this disclosure is not limited thereto, and it may also be another network device.

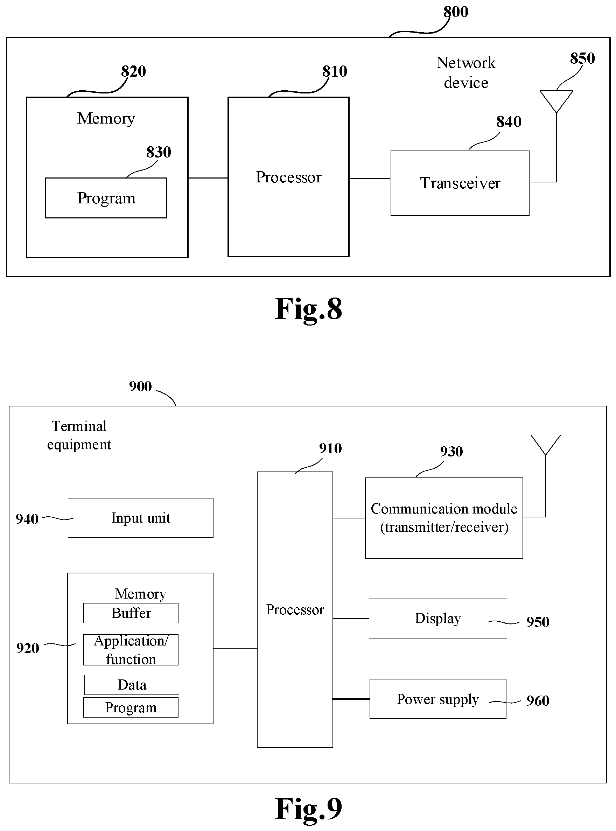

FIG. 8 is a schematic diagram of a structure of the network device of the embodiments of this disclosure. As shown in FIG. 8, the network device 800 may include a processor 810 (such as a central processing unit (CPU)) and a memory 820, the memory 820 being coupled to the processor 810. Wherein, the memory 820 may store various data, and furthermore, it may store a program 830 for information processing, and execute the program 830 under control of the processor 810.

For example, the processor 810 may be configured to execute a program to carry out the information transmission method described in the embodiments of the second aspect.

Furthermore, as shown in FIG. 8, the network device 800 may include a transceiver 840, and an antenna 850, etc. Wherein, functions of the above components are similar to those in the related art, and shall not be described herein any further. It should be noted that the network device 800 does not necessarily include all the parts shown in FIG. 8, and furthermore, the network device 800 may include parts not shown in FIG. 8, and the related art may be referred to.

The embodiments of this disclosure further provide a terminal equipment; however, this disclosure is not limited thereto, and it may also be another equipment.

FIG. 9 is a schematic diagram of the terminal equipment of the embodiments of this disclosure. As shown in FIG. 9, the terminal equipment 900 may include a processor 910 and a memory 920, the memory 920 storing data and a program and being coupled to the processor 910. It should be noted that this figure is illustrative only, and other types of structures may also be used, so as to supplement or replace this structure and achieve a telecommunications function or other functions.

For example, the processor 910 may be configured to execute a program to carry out the information reception method as described in the embodiments of the first aspect.

As shown in FIG. 9, the terminal equipment 900 may further include a communication module 930, an input unit 940, a display 950, and a power supply 960; wherein functions of the above components are similar to those in the related art, which shall not be described herein any further. It should be noted that the terminal equipment 900 does not necessarily include all the parts shown in FIG. 9, and the above components are not necessary. Furthermore, the terminal equipment 900 may include parts not shown in FIG. 9, and the related art may be referred to.

Embodiments of this disclosure provide a computer program, which, when executed in a terminal equipment, will cause the terminal equipment to carry out the information reception method as described in the embodiments of the first aspect.

Embodiments of this disclosure provide a storage medium, including a computer program, which will cause a terminal equipment to carry out the information reception method as described in the embodiments of the first aspect.

Embodiments of this disclosure provide a computer program, which, when executed in a network device, will cause the network device to carry out the information transmission method as described in the embodiments of the second aspect.

Embodiments of this disclosure provide a storage medium, including a computer program, which will cause a network device to carry out the information transmission method as described in the embodiments of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

Names of the higher layer parameters concerned in the embodiments of this disclosure are as shown in Table 5 below; however, they are not limited thereto, and other names may also be used.

Table 5

| | |
|---|---|
| Firs higher layer parameter | ScheduledCell-ListDCI-1-3 |
| Second higher layer parameter | ScheduledCell-ListDCI-0-3 |
| Third higher layer parameter | scheduledCellCombo-ListDCI-1-3 |
| Fourth higher layer parameter | scheduledCellCombo-ListDCI-0-3 |
| Fifth higher layer parameter | DormantBWP-Config-r16, or dormantBWP-Id |
| Sixth higher layer parameter | firstWithdeactivatedTimeBWP-Id-r16 |

(continued)

| Seventh higher layer parameter | dormancyGroupWithdeactivatedTime-r16 |
|---|---|
| Eighth higher layer parameter | Configuring the terminal equipment to monitor and/or receive the first DCI format and/or the DCI format in the scheduling cell |
| Ninth higher layer parameter | firstOutsideActiveTimeBWP-Id-r16 |
| Tenth higher layer parameter | firstActiveDownlinkBWP-Id |
| Eleventh higher layer parameter | MC-DCI-SetofCellsToAddModList |
| Twelfth higher layer parameter | MC-DCI-SetofCells |
| Thirteenth higher layer parameter | setofCellsID |
| Fourteenth higher layer parameter | ScheduledCellCombo |
| Fifteenth higher layer parameter | DormancyGroupID-r16 |
| Sixteenth higher layer parameter | firstActiveUplinkBWP-Id |

As to implementations containing the above embodiments, following supplements are further disclosed.

1. An information reception method, applicable to a terminal equipment side, wherein the method includes:

monitoring and/or receiving, by the terminal equipment, a first downlink control information format (DCI format) for scheduling a physical downlink shared channel (PDSCH) of one or more cells in a first cell set and/or a second DCI format for scheduling a physical uplink shared channel (PUSCH) of one or more cells in a second cell set in a scheduling cell; and
receiving a PDSCHs in some or all of cell(s) scheduled by the first DCI format, and/or transmitting a PUSCH in some or all of cell(s) scheduled by the second DCI format by the terminal equipment,.

2. The method according to supplement 1, wherein the method further includes: counting by the terminal equipment based on a reference cell for size(s) of the first DCI format and/or the second DCI format and/or PDCCH candidates used to detect the first DCI format and/or the second DCI format and/or corresponding non-overlapping control channel elements (CCEs), wherein the scheduling cell belongs to or does not belong to the first cell set, and/or the scheduling cell belongs to or does not belong to the second cell set;

and/or the cells in the first cell set and second cell set are completely or partially identical, and/or the first cell set and the second cell set include at least one identical cell;
and/or the scheduling cell belongs to the first cell set and/or the second cell set, and the terminal equipment is only provided with search space sets for the PDCCH candidates in the scheduling cell, the reference cell being the scheduling cell;
and/or the terminal equipment is provided with a search space set with a same search space identifier (searchSpaceId) for the first DCI format and/or the second DCI format in the scheduling cell and one cell (a serving cell) in the first cell set and/or the second cell set, the reference cell being the one cell.

3. The method according to supplement 1, wherein the scheduling cell and/or a reference cell of the first cell set and/or the second cell set are not configured with an Scell deactivation timer (sCellDeactivationTimer), or, the scheduling cell and/or a reference cell of the first cell set and/or the second cell set are configured with an Scell deactivation timer that is infinity; and/or a reference cell of the first cell set and/or the second cell set is dormant and/or deactivated, the terminal equipment counts based on the scheduling cell for the size(s) of the first DCI format and/or the second DCI format and/or the PDCCH candidates used to detect the first DCI format and/or the second DCI format and/or the corresponding non-overlapping CCEs, wherein the scheduling cell is different from a reference cell of the first cell set, and/or the scheduling cell is active and is non-dormant.
4. The method according to supplement 1, wherein the first cell set and/or the second cell set include(s) a dormant and/or a deactivated cell, and the terminal equipment determines size(s) of the first DCI format and/or the second DCI format not based on the dormant and/or deactivated cell, and/or the first DCI format and/or the second DCI format do(es) not include dedicated information bits for the dormant cell and/or deactivated cell; and/or if a cell with a smallest serving cell index in the cell(s) scheduled by the second DCI format is dormant or deactivated, the terminal equipment ignores a CSI request and/or a UL-SCH indicator in the second DCI format; and/or if the second DCI format includes a CSI request and/or a UL-SCH indicator, the terminal equipment does not expect that the cell(s) scheduled by the second DCI format include(s) a dormant cell and/or a deactivated cell, or the terminal equipment does not expect that a cell with a smallest cell index in the cell(s) scheduled by the second DCI format is dormant or deactivated; and/or the cell(s) scheduled by the first DCI format include(s) a dormant cell and/or a deactivated cell, and the terminal equipment does not receive a PDSCH(s) in the dormant cell and/or deactivated cell, and/or the cell(s) scheduled by the second DCI format include(s) a dormant cell and/or a deactivated cell, and the terminal equipment does not transmit a PUSCH in the dormant cell and/or deactivated cell.

5. An information transmission method, applicable to a network device, wherein the method includes:

transmitting, by the network device, a first downlink control information format (DCI format) for scheduling a physical downlink shared channel (PDSCH) of one or more cells in a first cell set and/or a second DCI format for scheduling a physical uplink shared channel (PUSCH) of one or more cells in a second cell set in a scheduling cell; and
transmitting a PDSCH in some or all of cell(s) scheduled by the first DCI format, and/or receiving a PUSCH(s) in some or all of cell(s) scheduled by the second DCI format by the network device,.

6. An information transmission method, applicable to a terminal equipment, wherein the method includes:

transmitting by the terminal equipment to the network device, first capability information for indicating that the terminal equipment supports an Scell dormancy indication of a first DCI format and/or second capability information for indicating that the terminal equipment supports an SCell dormancy indication of a second DCI format, and/or third capability information for indicating that the terminal equipment supports an SCell dormancy indication of a third DCI format and/or a fourth DCI format,
wherein the first DCI format is used to schedule PDSCH(s) of one or more cells, the second DCI format is used to schedule PUSCH(s) of one or more cells, the third DCI format is used to schedule PDSCH(s) of one cell, and the fourth DCI format is used to schedule PUSCH(s) of one cell.

7. An information reception method, applicable to a network device, wherein the method includes:

receiving, by the network device, first capability information for indicating that a terminal equipment supports an Scell dormancy indication of a first DCI format and/or second capability information for indicating that a terminal equipment supports an SCell dormancy indication of a second DCI format, and/or third capability information for indicating that a terminal equipment supports an SCell dormancy indication of a third DCI format and/or a fourth DCI format, transmitted by the terminal equipment,
wherein the first DCI format is used to schedule PDSCH(s) of one or more cells, the second DCI format is used to schedule PUSCH(s) of one or more cells, the third DCI format is used to schedule PDSCH(s) of one cell, and the fourth DCI format is used to schedule PUSCH(s) of one cell.

8. A terminal equipment, including a memory and a processor, the memory storing a computer program, and the processor being configured to execute the computer program to carry out the method as described in any one of supplements 1-4 or 6.

9. A network device, including a memory and a processor, the memory storing a computer program, and the processor being configured to execute the computer program to carry out the method as described in supplement 5 or 7.

10. A communication system, characterized in that the communication system includes the terminal equipment as described in supplement 8 and/or the network device as described in supplement 9.

**Claims**

1. An information reception apparatus, applicable to a terminal equipment, wherein the apparatus comprises a receiver, or comprises a receiver and a transmitter,

the receiver configured to monitor and/or receive a first downlink control information format (DCI format) for scheduling a physical downlink shared channel (PDSCH) of one or more cells in a first cell set and/or a second DCI format for scheduling a physical uplink shared channel (PUSCH) of one or more cells in a second cell set in a scheduling cell;
and the receiver further configured to receive a PDSCH in some or all of cell(s) scheduled by the first DCI format, and/or the transmitter configured to transmit a PUSCH in some or all of cell(s) scheduled by the second DCI format.

2. The apparatus according to claim 1, wherein the first cell set and the second cell set correspond to a same cell set identifier.

3. The apparatus according to claim 1, wherein the apparatus further comprises:
a processor configured to count based on a reference cell for size(s) of the first DCI format and/or the second DCI format and/or PDCCH candidates used to detect the first DCI format and/or the second DCI format and/or corresponding non-overlapping control channel elements (non-overlapping CCEs).

4. The apparatus according to claim 1, wherein the terminal equipment does not expect that the scheduling cell is a potentially dormant cell and/or a potentially deactivated cell, and/or the terminal equipment does not expect that the scheduling cell is indicated as being dormant and/or being deactivated, and/or the terminal equipment does not expect that the scheduling cell is dormant and/or deactivated, and/or the terminal equipment does not expect that the first cell set and/or the second cell set comprise(s) a potentially dormant cell and/or a potentially deactivated cell, and/or the terminal equipment does not expect that a cell in the first cell set and/or the second cell set is indicated as being dormant and/or being deactivated, and/or the terminal equipment does not expect that a cell in the first cell set and/or the second cell set is dormant and/or deactivated, and/or the terminal equipment does not expect that a reference cell of the first cell set and/or the second cell set is a potentially dormant cell and/or a potentially deactivated cell, and/or the terminal equipment does not expect that a reference cell of the first cell set and/or the second cell set is indicated as being dormant and/or being deactivated, and/or the terminal equipment does not expect that a reference cell of the first cell set and/or the second cell set is dormant and/or deactivated.

5. The apparatus according to claim 1, wherein one cell in the first cell set and/or the second cell set is dormant and/or deactivated, and the terminal equipment does not expect that the first DCI format and/or the second DCI format schedule(s) the one cell or a combination of cells comprising the one cell.

6. The apparatus according to claim 1, wherein the receiver is further configured to:

if the scheduling cell and/or a reference cell of the first cell set and/or the second cell set and/or a cell of the first cell set is/are dormant and/or deactivated, and/or a cell of the second cell set is dormant and/or deactivated, not monitor and/or not receive the first DCI format, and/or, not monitor and/or not receive the second DCI format.

7. The apparatus according to claim 1, wherein when the scheduling cell and/or a reference cell of the first cell set and/or the second cell set is dormant and/or deactivated, a cell in the first cell set and/or the second cell set is not being activated and is non-dormant.

8. The apparatus according to claim 1, wherein the scheduling cell and/or a reference cell of the first cell set and/or the second cell set and/or one or more cells in the first cell set is/are activated and non-dormant, and/or one or more cells in the second cell set is activated and non-dormant,
and the receiver monitors and/or receives the first DCI format, and/or, the receiver monitors and/or receives the second DCI format.

9. The apparatus according to claim 1 or 8, wherein the apparatus further comprises a processor, wherein a reference cell of the first cell set and/or the second cell set is dormant and/or deactivated, and the processor counts based on a scheduling cell for the size(s) of the first DCI format and/or the second DCI format and/or PDCCH candidates used to detect the first DCI format and/or the second DCI format and/or corresponding non-overlapping CCEs.

10. The apparatus according to claim 1, wherein the apparatus further comprises a processor, wherein the first cell set and/or the second cell set comprise(s) a dormant cell and/or a deactivated cell, and the processor determines size(s) of the first DCI format and/or the second DCI format based on an active BWP and/or a dormant BWP and/or a BWP configured/provided by a sixth higher layer parameter and/or a BWP configured/provided by a ninth higher layer parameter and/or a BWP configured/provided by a tenth higher layer parameter and/or a BWP configured/provided by a sixteenth higher layer parameter, for the dormant cell and/or based on a BWP configured/provided by a tenth higher layer parameter and/or a BWP configured/provided by a sixteenth higher layer parameter and/or a BWP configured/provided by a sixth higher layer parameter and/or a BWP configured/provided by a ninth higher layer parameter, for the deactivated cell.

11. The apparatus according to claim 1 or 10, wherein the apparatus further comprises a processor, wherein the first cell set and/or the second cell set comprise(s) a dormant cell and/or a deactivated cell, and/or the cell(s) scheduled by the first DCI format and/or the second DCI format comprise(s) a dormant cell and/or a deactivated cell, and the processor determines a size of information blocks corresponding to the dormant cell and/or the deactivated cell in a first part of first information fields in the first DCI format and/or the second DCI format based on an active BWP and/or a dormant BWP and/or a BWP configured/provided by a sixth higher layer parameter and/or a BWP configured/provided by a ninth higher layer parameter and/or a BWP configured/provided by a tenth higher layer parameter and/or a BWP configured/provided by a sixteenth higher layer parameter, for the dormant cell and/or based on a BWP configured/provided by a tenth higher layer parameter and/or a BWP configured/provided by a sixteenth higher layer parameters and/or a BWP configured/provided by a sixth higher layer parameter and/or a BWP configured/provided by a ninth higher layer parameter, for the deactivated cell.

12. The apparatus according to claim 1 or 10, wherein the first cell set and/or the second cell set comprise(s) a dormant cell and/or a deactivated cell, and a first part of first information fields in the first DCI format and/or the second DCI format does not comprise information blocks corresponding to the dormant cell and/or the deactivated cell.

13. The apparatus according to claim 1, wherein the first cell set and/or the second cell set comprise(s) a dormant cell and/or a deactivated cell, and/or the cell(s) scheduled by the first DCI format and/or the second DCI format comprise(s) a dormant cell and/or a deactivated cell, and a second part of first information fields in the first DCI format and/or the second DCI format is not applied or is applied to the dormant cell and/or the deactivated cell, and/or the apparatus further comprises a processor, wherein the processor ignores scheduling information to which the dormant cell corresponds.

14. The apparatus according to claim 1 or 13, wherein the first cell set and/or the second cell set comprise(s) a dormant cell and/or a deactivated cell, and/or the cell(s) scheduled by the first DCI format and/or the second DCI format comprise(s) a dormant cell and/or a deactivated cell, and an information block corresponding to the dormant cell and/or the deactivated cell in a third part of first information fields in the first DCI format and/or the second DCI format is not applied to the dormant cell and/or the deactivated cell, and/or the apparatus further comprises a processor, wherein the processor ignores an information block corresponding to the dormant cell and/or the deactivated cell in a third part of first information fields in the first DCI format and/or the second DCI format.

15. The apparatus according to claim 1, wherein the first cell set and/or the second cell set comprise(s) a dormant cell and/or a deactivated cell, and/or the cell(s) scheduled by the first DCI format and/or the second DCI format comprise(s) a dormant cell and/or a deactivated cell, and an index corresponding to the dormant cell and/or the deactivated cell in an entry indicated by a fourth part of first information fields in the first DCI format and/or the second DCI format is not applied to the dormant cell and/or the deactivated cell, and/or the apparatus further comprises a processor, wherein the processor ignores an index corresponding to the dormant cell and/or the deactivated cell in an entry indicated by a fourth part of first information fields in the first DCI format and/or the second DCI format.

16. The apparatus according to claim 1, wherein the second cell set comprises a dormant cell and/or a deactivated cell, and/or the cell(s) scheduled by the second DCI format comprise(s) a dormant cell and/or a deactivated cell, and a CSI request and/or a UL-SCH indicator in the second DCI format is/are applied to a cell with a smallest serving cell index in the cell(s) scheduled by the first DCI format and/or the second DCI format except the dormant cell and/or the deactivated cell, and/or, the transmitter transmits a CSI report in a PUSCH of a cell with a smallest serving cell index except the dormant cell and/or the deactivated cell, and/or, the transmitter transmits a UL-SCH or does not transmit a UL-SCH in a PUSCH of a cell with a smallest serving cell index except the dormant cell and/or the deactivated cell.

17. The apparatus according to claim 1, wherein the first cell set and/or the second cell set is/are a scheduled cell set/scheduled cell sets.

18. The apparatus according to claim 17, wherein the scheduled cell set(s) is/are indicated by a fourth information field included in the first DCI format and/or the second DCI format, or is/are configured by a higher layer parameter.

19. The apparatus according to claim 1, wherein the cell(s) scheduled by the first DCI format and/or the second DCI format is indicated by a second information field and/or a third information field in the first DCI format and/or the second DCI format.

20. An information transmission apparatus, applicable to a network device, wherein the apparatus comprises a transmitter, or comprises a transmitter and a receiver,

the transmitter configured to transmit a first downlink control information format (DCI format) for scheduling a physical downlink shared channel (PDSCH) of one or more cells in a first cell set and/or a second DCI format for scheduling a physical uplink shared channel (PUSCH) of one or more cells in a second cell set in a scheduling cell; and the transmitter further configured to transmit a PDSCH in some or all of cell(s) scheduled by the first DCI format, and/or the receiver configured to receive a PUSCH in some or all of cell(s) scheduled by the second DCI format.

**100**

**101**

**103**

**102**

# Fig.1

**201**

a terminal equipment monitors and/or receives a first downlink control information format (DCI format) for scheduling a physical downlink shared channel (PDSCH) of one or more cells in a first cell set and/or a second DCI format for scheduling a physical uplink shared channel (PUSCH) of one or more cells in a second cell set in a scheduling cell

**202**

the terminal equipment receives a PDSCH in some or all of cell(s) scheduled by the first DCI format, and/or transmits a PUSCH in some or all of cell(s) scheduled by the second DCI format

# Fig.2

MC-DCI-SetofCellsToAddModList

MC-DCI-SetofCells 1

| setofCellsId |
| scheduledCell-ListDCI-1-3 |
| ScheduledCell-ListDCI-0-3 |

scheduledCellCombo-ListDCI-1-3

| ScheduledCellCombo 1 |
| ScheduledCellCombo 2 |
| ⋮ |

scheduledCellCombo-ListDCI-0-3

| ScheduledCellCombo 1 |
| ScheduledCellCombo 2 |
| ⋮ |

MC-DCI-SetofCells 2

| setofCellsId |
| scheduledCell-ListDCI-1-3 |
| ScheduledCell-ListDCI-0-3 |

scheduledCellCombo-ListDCI-1-3

| ScheduledCellCombo 1 |
| ScheduledCellCombo 2 |
| ⋮ |

scheduledCellCombo-ListDCI-0-3

| ScheduledCellCombo 1 |
| ScheduledCellCombo 2 |
| ⋮ |

...

# Fig.3

Fig.4

501

the network device transmits a first downlink control information format (DCI format) for scheduling a physical downlink shared channel (PDSCH) of one or more cells in a first cell set and/or a second DCI format for scheduling a physical uplink shared channel (PUSCH) of one or more cells in a second cell set in a scheduling cell

502

the network device transmits a PDSCH in some or all of cell(s) scheduled by the first DCI format, and/or receives a PUSCH in some or all of cell(s) scheduled by the second DCI format

**Fig.5**

600

Information reception apparatus 601

Receiver

602

Transmitter

**Fig.6**

700

Information transmission apparatus 701

Transmitter

702

Receiver

**Fig.7**

800

820                    810            Network
                                      device        850

Memory              Processor                    840

       830                          Transceiver

Program

**Fig.8**

900

Terminal
equipment
                              910          930

940      Input unit                  Communication module
                                      (transmitter/receiver)

                          Processor

         Memory                      Display        950
         Buffer
920      Application/
         function
         Data                        Power supply   960
         Program

**Fig.9**

## INTERNATIONAL SEARCH REPORT

| International application No. |
| --- |
| **PCT/CN2023/122340** |

| A. | CLASSIFICATION OF SUBJECT MATTER |
| --- | --- |

H04W72/12(2023.01)i

According to International Patent Classification (IPC) or to both national classification and IPC

| B. | FIELDS SEARCHED |
| --- | --- |

Minimum documentation searched (classification system followed by classification symbols)

IPC: H04W, H04Q

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI, 3GPP: 调度, 小区, 集, 组, 多, 下行控制信息, 下行控制信道, 下行共享信道, 上行共享信道, 休眠, 睡眠, 去激活, 非活动, schedule, cell, set, group, multi, DCI, PDCCH, PDSCH, PUSCH, sleep, inactive, deactive

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115462033 A (BEIJING XIAOMI MOBILE SOFTWARE CO., LTD.) 09 December 2022 (2022-12-09) <br> description, paragraphs [0141]-[0142], [0195]-[0220], and [0329]-[0353] | 1-20 |
| X | CN 115039488 A (ZTE CORP.) 09 September 2022 (2022-09-09) <br> claims 1-20 | 1-20 |
| A | US 2022408464 A1 (SAMSUNG ELECTRONICS CO., LTD.) 22 December 2022 (2022-12-22) <br> entire document | 1-20 |
| A | LENOVO. "Feature Lead Summary #4 on Multi-cell PUSCH/PDSCH Scheduling with a Single DCI" <br> *3GPP TSG RAN WG1 Meeting #112, R1-2301094,* 03 March 2023 (2023-03-03), <br> entire document | 1-20 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 June 2024** | **06 June 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/122340**

| Patent document cited in search report | | | Publication date (day/month/year) | Patent family member(s) | | | Publication date (day/month/year) |
|---|---|---|---|---|---|---|---|
| CN | 115462033 | A | 09 December 2022 | WO | 2024021122 | A1 | 01 February 2024 |
| CN | 115039488 | A | 09 September 2022 | WO | 2022027561 | A1 | 10 February 2022 |
| | | | | US | 2022346131 | A1 | 27 October 2022 |
| | | | | EP | 4085718 | A1 | 09 November 2022 |
| US | 2022408464 | A1 | 22 December 2022 | WO | 2022265432 | A1 | 22 December 2022 |
| | | | | EP | 4305915 | A1 | 17 January 2024 |
| | | | | KR | 20240019158 | A | 14 February 2024 |
| | | | | CN | 117242883 | A | 15 December 2023 |

Form PCT/ISA/210 (patent family annex) (July 2022)